# EUROPÄISCHE PATENTSCHRIFT

(11) **EP 4 493 349 B1**
(45) Veröffentlichungstag und Bekanntmachung des Hinweises auf die Patenterteilung: **06.05.2026**
(21) Anmeldenummer: 23710896.4
(22) Anmeldetag: 13.03.2023
(51) Int. Cl.: B23K 26/082, B23K 26/08

(54) **VORRICHTUNG UND VERFAHREN ZUM SCHNEIDEN EINES SUBSTRATS MITTELS GEBÜNDELTER ELEKTROMAGNETISCHER STRAHLUNG**
APPARATUS AND METHOD FOR CUTTING A SUBSTRATE BY MEANS OF FOCUSED ELECTROMAGNETIC RADIATION
APPAREIL ET PROCÉDÉ DE DÉCOUPE D'UN SUBSTRAT AU MOYEN D'UN RAYONNEMENT ÉLECTROMAGNÉTIQUE FOCALISÉ

(30) Priorität: 14.03.2022 DE 102022105927
(43) Veröffentlichungstag der Anmeldung: 22.01.2025
(73) Patentinhaber: MB Automation GmbH & Co. KG, 93426 Roding (DE)
(72) Erfinder: SPÄTH, Alexander, 93495 Weiding (DE); WANJEK, Michael, 93149 Nittenau (DE)
(74) Vertreter: Platzöder Patentanwaltsgesellschaft mbH
(86) Internationale Anmeldenummer: PCT/EP2023/056369
(87) Internationale Veröffentlichungsnummer: WO 2023/174884

(56) Entgegenhaltungen:
- JP-A- H03 275 292
- US-A1- 2015 217 403
- US-A1- 2019 329 353

## Beschreibung

Die vorliegende Erfindung betrifft eine Vorrichtung und ein Verfahren zum Schneiden, insbesondere zum Laserschneiden, eines Substrats mittels gebündelter elektromagnetischer Strahlung. Insbesondere betrifft die Erfindung eine Vorrichtung und ein Verfahren zum Vereinzeln von Separatoren für galvanische Elemente aus einem, insbesondere folienartigen, Substrat aus einem als Separator für galvanische Elemente geeignetem Material, wie etwa aus einer ionenleitenden Polymer-Membran, z.B. aus PP oder PE.

Zum Schneiden von Materialien sind neben herkömmlichen mechanischen Schneideverfahren, z.B. mit Schneidklingen, auch strahlungsbasierte Schneideverfahren, insbesondere Laserschneideverfahren, bekannt. Laserschneideverfahren können insbesondere zum Schneiden von folienartigen Substraten eingesetzt werden.

Laserschneideverfahren ermöglichen es insbesondere, auch gekrümmte oder gewinkelte Schneidepfade zu verfolgen, was insbesondere dazu genutzt werden kann durch schleifenförmige Schneidepfade Teilabschnitte aus einem Substrat auszuschneiden. Solche Schneidepfade können insbesondere erreicht werden, indem eine Laserstrahlquelle mittels einer Verfahranordnung, insbesondere einem x-y-Tisch, entlang dem Schneidepfad verfahren wird. Das Dokument JP H03 275292 A offenbart den Oberbegriff der unabhängigen Ansprüche 1 und 12.

Es ist eine Aufgabe der Erfindung, das Schneiden eines Substrats mittels gebündelter elektromagnetischer Strahlung weiter zu verbessern, insbesondere im Hinblick auf das Erreichen einer hohen zeitlichen Effizienz.

Die Lösung dieser Aufgabe wird gemäß der Lehre der unabhängigen Ansprüche erreicht. Verschiedene Ausführungsformen und Weiterbildungen der Lösung sind Gegenstand der Unteransprüche.

Ein erster Aspekt der hier vorgestellten Lösung betrifft eine Vorrichtung zum Schneiden eines Substrats mittels gebündelter elektromagnetischer Strahlung gemäß Anspruch 1. während das Substrat von der Transporteinrichtung entlang des Transportpfads transportiert wird, eine auf den jeweiligen Schneidkopf einfallende elektromagnetische Strahlung mittels dieses Schneidkopfs als gebündelten elektromagnetischen Strahl auf eine Oberfläche des Substrats abzulenken; und (iii) eine Steuereinrichtung, die konfiguriert ist, die Ablenkeinrichtung und/oder die Transporteinrichtung auf solche Weise anzusteuern, dass der jeweilige abgelenkte Strahl, während der zugehörige Schneidkopf entlang eines Abschnitts seiner Bahnkurve verfahren und das Substrat von der Transporteinrichtung entlang des Transportpfads transportiert wird, bei seinem Auftreffen auf der Oberfläche des Substrats dort einen relativ zum Substrat wandernden bestrahlten Auftreffpunkt bildet, der auf der Oberfläche des Substrats einen definierten Schneidepfad durchläuft, um das Substrat entlang des Schneidepfads zu schneiden.

Unter dem Begriff "Schneidkopf", wie hierin verwendet, ist allgemein ein Element der Ablenkeinrichtung zu verstehen, das konfiguriert ist, einfallende elektromagnetische Strahlung als gebündelten elektromagnetischen Strahl auf eine Oberfläche eines durch die Transporteinrichtung transportierten Substrats abzulenken, wie etwa mittels zumindest eines Spiegels. Die Wirkung eines Schneidkopfs kann insbesondere ein Ablenken eines bereits fokussierten, d.h. gebündelten Strahls oder ein kombiniertes Ablenken und Fokussieren der einfallenden elektromagnetischen Strahlung umfassen.

Der Begriff "Auftreffpunkt", wie hierin verwendet, ist ein durch den auf das Substrat abgelenkten elektromagnetischen Strahl bestrahlte Flächenabschnitt auf dem Substrat zu verstehen. Dieser Flächenabschnitt kann dabei grundsätzlich eine beliebige Form aufweisen. Insbesondere kann er bei Verwendung eines Strahls mit einem kreisförmigen oder ellipsenförmigen Strahlquerschnitt, wie dies bei Verwendung von Laserstrahlungsquellen oftmals der Fall ist, zumindest näherungsweise eine Kreisform oder insbesondere bei schrägem Auftreffen auf das Substrat eine ellipsenförmige Form aufweisen. Stattdessen können insbesondere auch Strahlen mit rechteckigem Querschnitt zum Einsatz kommen, insbesondere solche, die im Wesentlichen einen Strichförmigen Querschnitt aufweisen, wo sich also Länge und Breite des Rechtecks stark unterscheiden. Da in Hinblick auf die Verwendung des abgelenkten Strahls zum Schneiden des Substrats entlang des Schneidepfads der auftreffende Strahl eine vom Material und der Dicke des Substrats ausreichend hohe Energiedichte aufweisen muss, wird der (maximale) Strahldurchmesser in der Regel sehr gering sein, z.B. kleiner oder gleich einem Millimeter, ohne dass dies jedoch als zwingende Einschränkung zu verstehen wäre.

Unter dem Begriff "unidirektional", wie hierin verwendet, bezieht sich auf die Bahnkurve eines jeweiligen Schneidkopfes, insbesondere im Sinne eines Umlaufsinns des Umlaufs des Schneidkopfes entlang seiner geschlossenen Bahnkurve.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier gegebenenfalls verwendet wird, ist im Sinne von "zwei oder mehr" zu verstehen.

Unter dem Begriff "konfiguriert" oder "eingerichtet" eine bestimmte Funktion zu erfüllen, (und jeweiligen Abwandlungen davon), wie er hier gegebenenfalls verwendet wird, ist zu verstehen, dass eine diesbezügliche Vorrichtung oder Komponente davon bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, so dass das konfigurieren mittels einer Auswahl einer dieser Konfigurationen bzw. Betriebsmodi erfolgen kann.

Bei der Vorrichtung nach dem ersten Aspekt werden der bzw. gegebenenfalls die Schneidköpfe unidirektional entlang ihrer jeweiligen geschlossenen Bahnkurve verfahren. Daher ist keine Richtungsumkehr mit entsprechenden Brems- und Beschleunigungsvorgängen erforderlich, sodass sehr hohe Geschwindigkeiten, insbesondere Durchschnittsgeschwindigkeiten, der Schneidköpfe und somit eine sehr hohe Rate von Schneidvorgängen erreicht werden kann. Auch können die für das Verfahren der Schneidköpfe benötigten Antriebe dementsprechend weniger anspruchsvoll ausgelegt werden, da sie weder die im Zusammenhang mit den genannten Brems- und Beschleunigungsvorgängen erforderlichen Kräfte aufbringen noch eine Richtungsumkehr bewerkstelligen müssen.

Dennoch ist die Vorrichtung in der Lage aufgrund des Zusammenspiels der Transportbewegung des Substrats und der gesteuerten Bewegung des bzw. der Schneidköpfe eine große Vielzahl verschiedenster Schneidepfade zu ermöglichen. Dies gilt ganz besonders dann, wenn die Bewegung des bzw. der Schneidköpfe und die Bewegung des Substrats mittels der Transporteinrichtung koordiniert gesteuert werden.

Der Schneidkopf bzw. die Schneidköpfe zeichnen sich insbesondere dadurch aus, dass sie konfiguriert sind, die einfallende Strahlung auf das Substrat abzulenken. Im Gegensatz zu beweglichen Schneidköpfen, die selbst eine Strahlungsquelle tragen, ermöglicht es dieses Konzept, eine oder mehrere feststehenden Strahlungsquellen zu verwenden. Die Bewegung des jeweiligen Schneidkopfs verläuft dabei so, dass während des Schneidevorgangs die Strahlung der feststehenden Strahlungsquelle stets so auf den jeweiligen Schneidkopf gerichtet bleibt, dass dieser trotz seiner Bewegung die somit auf ihn einfallende Strahlung zur Ausbildung des Schneidepfads auf das Substrat ablenkt. Eine solche Anordnung bzw. Implementierung der Vorrichtung kann insbesondere so ausgebildet sein, dass der jeweilige Schneidkopf sich während des Schneidevorgangs geradlinig bewegt und die einfallende Strahlung entlang der durch die geradlinige Bewegung definierten Bewegungsrichtung auf den Schneidkopf einfällt.

Nachfolgend werden verschiedene beispielhafte Ausführungsformen der Vorrichtung beschrieben, die jeweils, soweit dies nicht ausdrücklich ausgeschlossen wird oder technisch unmöglich ist, beliebig miteinander sowie mit dem im Weiteren beschriebenen, auf ein Verfahren bezogenen zweiten Aspekt der Lösung kombiniert werden können.

Bei einigen Ausführungsformen ist die Ablenkeinrichtung so konfiguriert, dass die Bahnkurve zumindest eines Schneidkopfs zumindest einen Abschnitt aufweist, in dem sie schräg zum Transportpfad verläuft. Des Weiteren ist die Steuereinrichtung konfiguriert, die Ablenkeinrichtung und die Transporteinrichtung so anzusteuern, dass sich ein zumindest abschnittsweise geradliniger Schneidepfad ergibt, während das Substrat mittels der Transporteinrichtung entlang des Transportpfads transportiert wird und sich dieser Schneidkopf entlang des Abschnitts seiner Bahnkurve bewegt und dabei die auf ihn einfallende Strahlung auf die Oberfläche des Substrats ablenkt.

Insbesondere kann dazu die Steuereinrichtung konfiguriert sein, die Ablenkeinrichtung und die Transporteinrichtung so anzusteuern, dass der Transport des Substrats mittels der Transporteinrichtung entlang des Transportpfads und die gleichzeitige Bewegung des Schneidkopfs entlang des Abschnitts seiner Bahnkurve jeweils mit konstanter Geschwindigkeit erfolgen. In diesem Fall ist der Winkel, in dem der geradlinige Schneidepfad zum Transportpfad steht vom Verhältnis der jeweils konstanten Geschwindigkeiten des Schneidkopf einerseits und der Bewegung des Substrats andererseits abhängig. Wird dieses Verhältnis verändert, ändert sich somit auch der Winkel. Anstelle eines Betriebs, bei dem diese beiden Geschwindigkeiten jeweils konstant sind, ist es jedoch auch möglich, die Vorrichtung so auszulegen oder zu betreiben, dass die Geschwindigkeit des Schneidkopf in Abhängigkeit von der Geschwindigkeit der Substratbewegung, oder umgekehrt, dynamisch gesteuert oder geregelt wird. Je nach Art dieser Abhängigkeit lassen sich damit wiederum geradlinige Schneidepfade oder aber stattdessen auch Schneidepfade mit einem anderen, insbesondere gekrümmten oder eckigen, Verlauf erzielen.

Bei einigen Ausführungsformen weist zumindest ein Schneidkopf zur Wandlung der auf ihn einfallenden elektromagnetischen Strahlung in einen abgelenkten gebündelten elektromagnetischen Strahl einen Umlenkspiegel sowie eine Fokussieroptik auf. Die Fokussieroptik kann dabei insbesondere die Aufgabe erfüllen, die einfallende elektromagnetische Strahlung - erstmals oder erneut - so stark zu bündeln, dass sie am Auftreffpunkt an der Substratoberfläche eine zum Schneiden ausreichend hohe Energiedichte aufweist. Sie kann zudem dazu dienen, die Richtung des abgelenkten Strahls zu definieren, insbesondere im Zusammenspiel mit dem Umlenkspiegel. Auch ist es denkbar, das Fokussieroptik selbst oder ihre Lage im Strahlengang des abgelenkten Strahls variabel einstellbar ist, um insbesondere einen Strahldurchmesser und somit eine breite der sich beim Schneiden des Substrats ergebenden Schnittlinie zu definieren.

Bei einigen Ausführungsformen weist die Vorrichtung zumindest eine Strahlungsquelle zur Erzeugung der mittels des zumindest einen Schneidkopfes abzulenkenden elektromagnetischen Strahlung auf. Somit kann die Vorrichtung dann, zumindest mit Ausnahme einer möglicherweise erforderlichen externen Energiezufuhr, die aber stattdessen auch intern durch eine optional zur Vorrichtung selbst gehörenden Energiequelle, insbesondere Batterie, erreicht werden kann, autark betrieben werden.

Die zumindest eine Strahlungsquelle kann insbesondere eine Laserstrahlungsquelle aufweisen. Eine solche Strahlungsquelle kann insbesondere einen Kohlenstoffdioxidlaser als Laserstrahlungsquelle aufweisen. Die Auswahl der Strahlungsquelle wird typischerweise in Abhängigkeit von der Art des Zuschneidens oder des Substrats gewählt sein. Ein Kohlenstoffdioxidlaser eignet sich insbesondere zum Schneiden von Polymerfolien, insbesondere Separatorfolien für galvanische Elemente.

Bei einigen Ausführungsformen verläuft die Bahnkurve von zumindest einem, insbesondere jedem, Schneidkopf in einer Ebene. Dies ermöglicht besonders einfache und platzsparende Implementierungen, da Schneidköpfe nur entlang von zwei Dimensionen bewegt werden müssen, um entlang der geschlossenen Bahnkurve umzulaufen. Im Falle von mehreren Schneidköpfen können dabei die Ebenen der jeweiligen Bahnkurven insbesondere zusammenfallen. Dies ist insbesondere dann der Fall, wenn die jeweiligen Bahnkurven dieser Schneidköpfe zusammenfallen, beispielsweise wenn sich diese Schneidköpfe sämtlich entlang einer bestimmten geschlossenen Schienenbahn bewegen.

Stattdessen ist es jedoch insbesondere auch möglich, dass die Bahnkurven der verschiedenen Schneidköpfe parallel zueinander liegen. So lässt sich insbesondere erreichen, dass die Schneidköpfe simultan zum Schneiden des Substrats eingesetzt werden können, wobei sie zueinander räumlich versetzte Schneidepfade auf dem Substrat generieren. Damit ist eine Parallelisierung und somit Durchsatzsteigerung beim Betrieb der Vorrichtung möglich. Die Schnitte der verschiedenen Schneidköpfe können dabei entweder voneinander separiert erfolgen, oder kumulativ eine aus den verschiedenen Schnitten zusammengesetzte, zusammenhängende Schnittlinie ergeben. Letzteres ist insbesondere dann vorteilhaft, wenn die Schnittlinie dazu dienen soll aus dem Substrat ein Teilstück herauszutrennen.

Aufgrund der Parallelität der Bahnkurven lässt sich zum einen eine besonders platzsparende Anordnung der Bahnkurven bzw. der Ablenkeinrichtung zu ihrer Ausführung, erreichen. Zum anderen ist es so auch besonders einfach möglich, mehrere gleichartige Schnitte simultan auszuführen, etwa um simultan verschiedene Abschnitte des Substrats unter Ausbildung von untereinander gleichen, aber räumlich versetzt zueinander liegenden Schneidepfaden vom Substrat abzutrennen.

Bei einigen Ausführungsformen weist die Bahnkurve des zumindest einen Schneidkopfs, dessen Bahnkurve in einer Ebene verläuft, eine ovale oder elliptische Form auf. Diese Formen sind besonders geeignet, um eine möglichst konstante Geschwindigkeit ohne abrupte Richtungsänderungen und somit eine ruck- und vibrationsfreie Umlaufbewegung des Schneidkopfs entlang seiner geschlossenen Bahnkurve zu ermöglichen. Dies dient wiederum der Ausbildung von möglichst genauen Schnitten mit geringer Schnittbreite und weitgehend ungestörten Schnittlinienverläufen.

Bei einigen Ausführungsformen definiert die Transporteinrichtung eine ebene Bahnfläche, auf oder entlang der sie das Substrat fördern kann, und die Ebene, in der die Bahnkurve des zumindest einen Schneidkopfs verläuft, verläuft parallel zu der ebenen Bahnfläche. Dies ermöglicht insbesondere sehr flache Bauformen der Vorrichtung.

Bei einigen dazu alternativen Ausführungsformen definiert die Transporteinrichtung ebenso eine ebene Bahnfläche, auf oder entlang der sie das Substrat fördern kann. Die Ebene, in der die Bahnkurve des zumindest einen Schneidkopfs verläuft, und die ebene Bahnfläche liegen hier jedoch nicht parallel, insbesondere orthogonal, zueinander. Eine solche Anordnung ist insbesondere im Hinblick auf eine kompakte Bauform der Vorrichtung bezogen auf ihre Erstreckung in einer Richtung entlang des Transportpfads vorteilhaft. Das kann insbesondere dann zum Tragen kommen, wenn die Vorrichtung Teil einer Prozess- insbesondere Fertigungslinie mit mehreren aneinander gereihten Verarbeitungsvorrichtungen ist. Die kompakte Bauform ermöglich somit auch besonders kompakte Ausführungen einer solchen Linie insgesamt.

Bei einigen Ausführungsformen weist die Ablenkeinrichtung zumindest zwei Schneidköpfe auf, deren Bahnkurven zusammenfallen. Auch dies erlaubt besonders kompakte, d.h. platzsparende Implementierungen sowie hohe Verarbeitungsgeschwindigkeiten. Insbesondere lassen sich so in kurzer Zeit mehrere zueinander parallele Schneidepfade verwirklichen, insbesondere bei konstanter Transportgeschwindigkeit des Substrats. Wie schon vorausgehend erwähnt, kann die Ablenkeinrichtung bei diesen Ausführungsformen insbesondere so ausgestaltet sein, dass sich diese zumindest zwei Schneidköpfe sämtlich entlang einer bestimmten geschlossenen Schienenbahn bewegen. Gemäß einer anderen Variante sind die Schneidköpfe voneinander beabstandet an einem entlang der geschlossenen Bahnkurve umlaufenden in sich geschlossenen Transportelement, wie etwa einem Transportriemen, einer Kette oder einer Seilschleife montiert.

Bei einigen Ausführungsformen weist die Ablenkeinrichtung zumindest zwei Schneidköpfe auf, deren Bahnkurven sich unterscheiden. Insbesondere können die Bahnkurven voneinander beabstandet parallel zueinander verlaufen. Dies ermöglicht insbesondere auch ein simultanes Schneiden des Substrats an verschiedenen Positionen entlang des Transportpfads des Substrats.

Die Steuereinrichtung ist konfiguriert, die Ablenkeinrichtung und die Transporteinrichtung auf koordinierte Weise so anzusteuern, dass sich die jeweiligen Schneidepfade von zumindest zwei Schneidköpfen der Vorrichtung (200, 300) auf der Oberfläche des Substrats berühren oder überschneiden, um einen kombinierten zusammenhängenden Schneidepfad zu bilden. Dies ermöglicht es insbesondere, Verläufe für den kombinierten zusammenhängenden Schneidepfad zu realisieren, die mit einem einzigen Schneidkopf nicht oder nur unter zusätzlichem Aufwand implementierbar wären. Auch lässt sich so wiederum eine Durchsatzrate für den Schneidprozess steigern, wenn die Schneidköpfe zumindest temporär simultan zur Ausbildung des kombinierten zusammenhängenden Schneidepfads betrieben werden.

Bei einigen Ausführungsformen ist die Steuereinrichtung konfiguriert, die Ablenkeinrichtung und die Transporteinrichtung auf koordinierte Weise so anzusteuern, dass sich auf der Oberfläche des Substrats ein zumindest abschnittsweise U-förmiger Schneidepfad als Schneidepfad eines einzigen Schneidkopfs oder als ein aus mehreren sich berührenden oder überschneidenden Schneidepfaden von zumindest zwei verschiedenen Schneidköpfen gebildeter kombinierter zusammenhängender Schneidepfad ergibt. Speziell bei der Verwendung von zumindest zwei verschiedenen Schneidköpfen ist es möglich, die Transportrichtung des Substrats entlang des Transportpfads unidirektional, insbesondere zum Transport des Substrats mit konstanter Transportgeschwindigkeit, zu wählen. Ein solcher U-förmige Schneidepfad ist insbesondere dazu geeignet, aus dem Substrat mittels eines von einem Startpunkt an einer Außenkante des Substrats ausgehenden und bis hin zu einem auf derselben Außenkante liegenden Endpunkt verlaufenden Schneidepfads einen Teilabschnitt aus dem Substrat abzutrennen.

Bei einigen Ausführungsformen weist die Ablenkeinrichtung zwei oder mehr jeweils entlang der geschlossenen Bahnkurve unidirektional umlaufend verfahrbare Schneidköpfe auf, von denen zumindest einer konfiguriert ist, auf einer ersten Seite der geschlossenen Bahnkurve umzulaufen, während zumindest ein anderer der Schneidköpfe konfiguriert ist, auf einer zweiten, der ersten Seite gegenüberliegenden Seite der Bahnkurve umzulaufen. So ergibt sich entlang einer orthogonal zu einer durch die Bahnkurve eingeschlossenen Fläche stehenden Richtung ein räumlicher Versatz der Schneidköpfe zwischen den beiden Seiten. Dies kann dazu genutzt werden, die Frequenz aufeinanderfolgender Schnitte zu erhöhen, da nach einem ersten Schnitt mit einem zeitlich ersten der Schneidköpfe, der bezogen auf die Transportrichtung des Substrats stromabwärts der Transportrichtung angeordnet ist, der zeitlich nachfolgende zweite Schnitt bereits mit einem zweiten der Schneidköpfe, der bezogen auf die Transportrichtung des Substrats stromaufwärts der Transportrichtung angeordnet ist, begonnen werden kann, bevor dieser Schneidepfad auf dem Substrat entlang dessen Transportrichtung den ersten Schneidkopf erreicht.

Insbesondere sind bei einigen dieser Ausführungsformen die Schneidköpfe beider Seiten konfiguriert, entlang der Bahnkurve räumlich zueinander versetzt und synchron umzulaufen, derart, dass je Umlauf zumindest ein Schneidkopf auf der ersten Seite und ein Schneidkopf auf der zweiten Seite jeweils zum Schneiden des Substrats entlang eines jeweils zugeordneten Schneidpfads mit der elektromagnetischen Strahlung bestrahlt werden.

Die Schnitte des ersten Schneidkopfs einerseits und die Schnitte des zweiten Schneidkopfs andererseits können somit derart gestaffelt ausgeführt werden, dass bei einem einzigen Umlauf der Schneidköpfe entlang der Schneidlinie zwei parallele Schnitte, je einer vom ersten Schneidkopf und je einer vom zweiten Schneidkopf herstellen lassen und so ein besonders hoher Durchsatz erreicht werden kann.

Ein zweiter Aspekt der hier vorgestellten Lösung betrifft ein Verfahren zum Schneiden eines Substrats mittels gebündelter elektromagnetischer Strahlung. Das Verfahren weist auf: (i) Transportieren des Substrats entlang eines Transportpfads mittels einer Transporteinrichtung; (ii) Ablenken von elektromagnetischer Strahlung auf das Substrat mittels einer Ablenkeinrichtung mit einem oder mehreren jeweils entlang einer geschlossenen Bahnkurve unidirektional umlaufend verfahrbaren Schneidköpfen, während das Substrat entlang des Transportpfads transportiert wird. Dabei wird eine auf den jeweiligen Schneidkopf einfallende elektromagnetische Strahlung mittels dieses Schneidkopfs als gebündelter elektromagnetischer Strahl auf eine Oberfläche des Substrats abgelenkt und die Ablenkeinrichtung und/oder die Transporteinrichtung auf solche Weise angesteuert, dass der jeweilige abgelenkte Strahl, während der zugehörige Schneidkopf entlang seiner Bahnkurve verfahren und das Substrat von der Transporteinrichtung entlang des Transportpfads transportiert wird, bei seinem Auftreffen auf der Oberfläche des Substrats dort einen definierten Schneidepfad durchläuft, um das Substrat entlang des Schneidepfads zu schneiden.

Das Verfahren korrespondiert somit zur Vorrichtung gemäß dem ersten Aspekt der Lösung, sodass die in Bezug auf den ersten Aspekt erläuterten Merkmale und Vorteile entsprechend auch für das Verfahren gelten.

Das Schneiden des Substrats wird so ausgeführt, dass dadurch aus dem Substrat ein oder mehrere Teilstücke entlang einer jeweiligen durch den bzw. die Schneidepfade definierten Schnittlinie abgetrennt werden.

Zum Abtrennen zumindest eines Teilstücks werden zumindest zwei Schneidköpfe eingesetzt, wobei der bzw. jeder jeweilige Schneidepfad jedes dieser Schneidköpfe nur einen Streckenabschnitt der Schnittlinie bildet, ohne diese bereits vollständig zu durchlaufen, und sich die Schneidepfade dieser Schneidköpfe insgesamt zur vollständigen Schnittlinie ergänzen. Dies ermöglicht zum einen das Ausbilden einer Schnittlinie, die mit einem einzigen Schneidkopf nicht oder nur mit erhöhtem Aufwand oder unter Geschwindigkeitseinbußen bzgl. der Durchsatzrate umsetzbar wären. Zum anderen lässt sich eine solche koordinierte Verwendung mehrerer Schneidköpfe zur Ausbildung der Schnittlinie auch zur Verkürzung der dazu erforderlichen Prozessierungszeit und somit zur Erhöhung der Durchsatzrate genutzt werden.

Bei einigen Ausführungsformen wird als das zu schneidende Substrat ein entlang des Transportpfads transportiertes bahnartiges Substrat verwendet und das Schneiden erfolgt so, dass die Schnittlinie für zumindest ein Teilstück des Substrats zwischen zwei Endpunkten der Schnittlinie (genauer einem Startpunkt und einem Endpunkt) verläuft, die voneinander beabstandet auf einer selben Außenkante, insbesondere einer Seitenkante des Substrats liegen. Die Schnittlinie kann dabei insbesondere eine vorausgehend schon im Zusammenhang mit der Beschreibung der Vorrichtung erwähnte U-Form aufweisen. Ein solcher ist sind insbesondere dazu geeignet, aus dem Substrat mittels eines von einem Startpunkt an einer Außenkante des Substrats ausgehenden und bis hin zu einem auf derselben Außenkante liegenden Endpunkt verlaufenden Schneidepfads einen Teilabschnitt aus dem Substrat abzutrennen.

Bei einigen Ausführungsformen wird als das zu schneidende Substrat ein Substrat verwendet, das eine als Separator für galvanische Elemente geeignete Materialschicht aufweist. Durch das Schneiden des Substrats werden daraus ein oder mehrere Bauteile für galvanische Elemente vereinzelt. Das Verfahren eignet sich insbesondere zum Schneiden, insbesondere Hochgeschwindigkeitsschneiden, von dünnen folienartigen Separator-Substraten, wie etwa polymerbasierten Substraten (z.B. aus PE- oder PP-Material). Die Foliendicken können dabei beispielsweise im Bereich von 1 bis 20 *µ*m liegen.

Bei einigen Ausführungsformen wird als das zu schneidende Substrat ein Substrat mit mehreren aufeinander gestapelten Schichten verwendet, von denen eine die als Separator für galvanische Elemente geeignete Materialschicht ist und eine dazu benachbart liegende weitere Schicht ein Elektrodenmaterial für ein galvanisches Element ist. So lassen sich in demselben Schneidevorgang sowohl der Separator als auch eine benachbarte Elektrode mittels Abtrennens aus dem Substrat ausbilden, was zum einen wiederum zur Duchsatzsteigerung genutzt werden kann und zum anderen zur Reduktion eines nachfolgend zur Ausbildung eines galvanischen Elements genutzten Prozesses, da dort nur noch eine weitere Elektrode hinzugefügt werden muss.

Bei einigen Ausführungsformen wird zum Schneiden des Substrats eine Vorrichtung nach dem ersten Aspekt, insbesondere gemäß einer oder mehreren ihrer hierin beschriebenen Ausführungsformen, verwendet.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** schematisch eine erste beispielhafte Ausführungsform einer Schneidvorrichtung;
**Fig. 2A** schematisch eine zweite beispielhafte Ausführungsform einer Schneidvorrichtung;
**Fig. 2B** schematisch eine dritte beispielhafte Ausführungsform einer Schneidvorrichtung;
**Fig. 2C** schematisch eine vierte beispielhafte Ausführungsform einer Schneidvorrichtung;
**Fig. 3** schematisch eine beispielhafte Ausführungsform eines Schneidmoduls für quer zum Substrat laufende Schnitte während der Ausführung zweier Verfahrensabschnitte eines Schneidverfahrens zum Schneiden des Substrats;
**Fig. 4** ein erstes beispielhaftes Schnittmuster zum Vereinzeln von Separatoren einschließlich einer darauf aufgebrachten Elektrodenschicht aus dem Substrat;
**Fig. 5** schematisch eine fünfte beispielhafte Ausführungsform einer Schneidvorrichtung;
**Fig. 6** ein zweites beispielhaftes Schnittmuster zum Vereinzeln von Separatoren einschließlich einer darauf aufgebrachten Elektrodenschicht aus dem Substrat; und
**Fig. 7** eine Herstellung eines beispielhaften dritten Schnittmusters zum Vereinzeln von Separatoren einschließlich einer darauf aufgebrachten Elektrodenschicht aus dem Substrat.

In den Figuren bezeichnen gleiche Bezugszeichen gleiche, ähnliche oder einander entsprechende Elemente. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich werden. In den Figuren dargestellte Verbindungen und Kopplungen zwischen funktionellen Einheiten und Elementen können, soweit nicht ausdrücklich anders angegeben, auch als indirekte Verbindung oder Kopplung implementiert werden. Funktional definierte Einheiten, insbesondere die Steuereinrichtung, können insbesondere als Hardware, Software oder eine Kombination aus Hardware und Software implementiert werden.

Im Folgenden werden beispielhafte Ausführungsformen einer Schneidanordnung sowie eines damit ausführbaren Schneideverfahrens gemäß verschiedenen Aspekten der hierin vorgestellten Lösung gemeinsam genauer beschrieben.

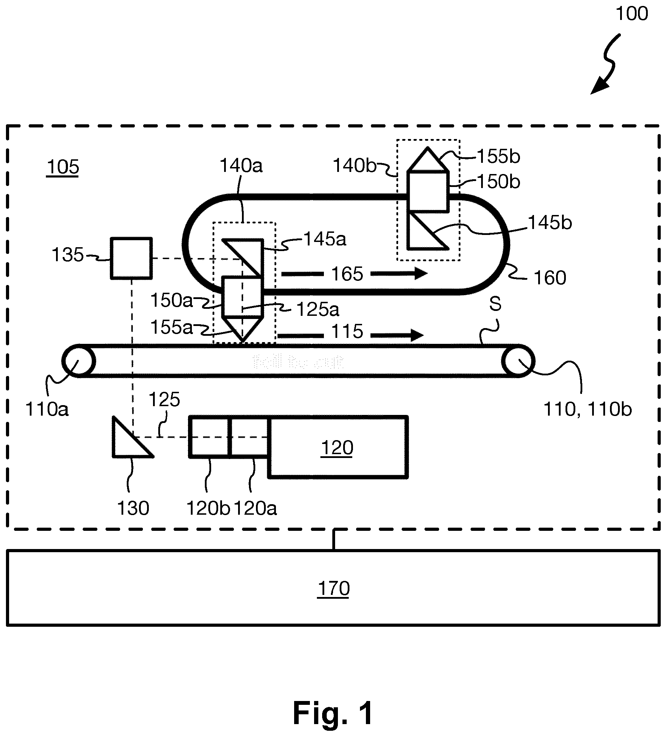

Eine in **Fig. 1** in einer seitlichen Querschnittansicht illustrierte erste beispielhafte Ausführungsform 100 einer Vorrichtung zum Schneiden eines Substrats mittels gebündelter elektromagnetischer Strahlung (Schneidvorrichtung) weist ein Schneidmodul 105 sowie eine Steuereinrichtung 170 auf. Die Steuervorrichtung 170 dient zur Steuerung des Schneidmoduls 105. Das Schneidmodul 105 weist eine Transporteinrichtung 110 auf, die insbesondere, wie in Fig. 1 gezeigt, als ein zwischen zwei Rollen 110a und 110b verlaufendes Förderband ausgebildet sein kann. Die Transporteinrichtung 110 ist dabei konfiguriert ein Substrat S entlang einer Transportrichtung 115 zu transportieren. Das Substrat kann insbesondere folienförmig sein. Speziell kann es sich dabei um eine Separatorfolie handeln, also um eine Folie aus einem Material, das als Separator für ein galvanisches Element, wie etwa eine Lithiumionenzelle, geeignet ist. Insbesondere sind Polypropylen (PP) und Polyethylen (PE) dafür geeignete Werkstoffe, aber auch andere Werkstoffe sind möglich. das Substrat kann ein oder mehrlagig sein. Insbesondere ist es im Falle einer Separatorfolie möglich, dass diese bereits mit einer Elektrodenschicht, beispielsweise aus einem Anodenmaterial (oder einem Kathodenmaterial) beschichtet ist. Im vorliegenden Beispiel ist die Transporteinrichtung 110 so konfiguriert und angeordnet, dass sie eine Bahnfläche (als Transportfläche) für ein auf ihr liegendes Substrat (entgegen der Wirkung der Schwerkraft) bereitstellt, um dieses zu tragen und auf der Bahnfläche liegend zu transportieren. Idealerweise ist die Bahnfläche dazu zumindest während ihres Betriebs horizontal, d. h. orthogonal zur Schwerkraft, angeordnet. Die Transporteinrichtung kann insbesondere ein Vakuumförderband zum Ansaugen des zu schneidenden Substrats aufweisen. Das Substrat kann somit faltenfrei, ausgerichtet und rutschfest gelagert transportiert werden. So wird die Genauigkeit und die Qualität des Schneidens gewährleistet bzw. zusätzlich erhöht.

Es ist insbesondere auch möglich, ein "endloses" Substrat zu nutzen, das gemäß einem Rolle-zu-Rolle Prozess (engl. "reel-to-reel") transportiert wird. Dies kann insbesondere so erfolgen, dass das Substrat (i) von einer ersten Rolle abgezogen, (ii) am Vakuumförderband angeordnet und mittels Unterdrucks (bzw. "Vakuum") angesaugt, dann (iii) mit der Schneidvorrichtung geschnitten und (iv) entweder mit einer zweiten Rolle wieder für die spätere Verarbeitung aufgerollt wird (z. B. wenn nur eine Folie geschnitten wird). Im Schritt (iv) kann stattdessen insbesondere auch nur ein nach dem Schneiden übriggebliebener Randbereich bzw. Abfall wieder aufgerollt werden, während die aus dem Substrat herausgetrennten Teilabschnitte anderweitig gesammelt oder weiterverarbeitet werden.

Das Schneidmodul 105 weist des Weiteren einen oder gemäß der Erfindung mehrere Schneidköpfe auf. Im vorliegenden Beispiel sind dies zwei Schneidköpfe 140a und 140b, die entlang einer Bahnkurve 160, die insbesondere mittels einer Schienenvorrichtung implementiert sein kann, entlang einer Umlaufrichtung 165 in einer geschlossenen, beispielsweise ovalen, Bewegungsschleife umlaufen können. Die Bahnkurve 160 liegt dabei in einer Ebene, die im vorliegenden Beispiel senkrecht zur Bahnfläche und somit dem Substrat S verläuft. Die Bewegungskurven beider Schneidköpfe liegen hier auf derselben Bahnkurve und fallen somit zusammen. Der Antrieb für die Umlaufbewegung der Schneidköpfe 140a und 140b kann insbesondere elektromotorisch erfolgen.

Die Bahnkurve 160 verläuft so, dass in einem Abschnitt der Bahnkurve ein während seines Umlaufs diesen Abschnitt durchlaufender Schneidkopf 140a bzw. 140b so in einem geringen Abstand von dem entlang der Transportrichtung 115 transportierten Substrat S verfahren wird, dass ein von dem jeweiligen Schneidkopf 140a bzw. 140b auf das Substrat S gerichteter Laserstrahl 125a zum Schneiden des Substrats S entlang eines durch die Relativbewegung von dem jeweiligen Schneidkopf 140a bzw. 140b und dem transportierten Substrat S definierten Schneidepfad verwendet werden kann. Idealerweise trifft der Laserstrahl 125a dazu senkrecht auf das Substrat S auf.

Zur Generierung eines Laserstrahls 125 (als Beispiel für gebündelte elektromagnetische Strahlung) weist die Schneidvorrichtung 100 eine Laserstrahlungsquelle 120, insbesondere einen Kohlenstoffdioxidlaser, auf, die mit einem Blendenverschluss (Shutter) 120a sowie einem Strahlaufweiter 120b versehen ist, sodass mittels des Blendenverschlusses 120a der Laserstrahl 125 durch die Steuereinrichtung 170 gesteuert unterbrochen werden kann und der Querschnitt des Laserstrahls 125 anhand des Strahlaufweiters 120b auf ein gewünschtes Maß eingestellt werden kann. Über einen ersten Umlenkspiegel 130 und einen zweiten Umlenkspiegel 135 wird der Laserstrahl 125 auf den jeweils gerade zum Schneiden verwendeten Schneidkopf 140a bzw. 140b gerichtet. In Fig. 1 ist dies für den Schneidkopf 140a darstellt. Jeder der beiden Schneidköpfe 140a bzw. 140b weist einen dritten Umlenkspiegel 145a bzw. 145b auf, um den am Schneidkopf eintreffenden Laserstrahl 125 als abgelenkter Laserstrahl 125a in Richtung auf das Substrat S abzulenken.

Der jeweilige dritte Umlenkspiegel 145a bzw. 145b ist, ebenso wie eine jeweilige Fokussieroptik 155a bzw. 155b zum Fokussieren des abgelenkten Laserstrahls 125a, auf einem Schneidkopfkörper 150a bzw. 150b angebracht. Mittels der Fokussieroptik 155a bzw. 155b, die auch bezüglich ihrer Fokussiereigenschaften (insbesondere Brennweite) variabel einstellbar sein kann, kann die Energiedichte des abgelenkten Laserstrahls 125a, gegebenenfalls variabel, erhöht werden, um ein Schneiden des Substrats S mittels des fokussierten Laserstrahls 125a überhaupt zu erreichen oder die Schneidwirkung anzupassen, insbesondere bezüglich der Schnittbreite oder der zum Schneiden benötigten Zeitdauer.

Beim Betrieb der Schneidvorrichtung 100 laufen die beiden Schneidköpfe 140a und. 140b entlang der Umlaufrichtung 165 entlang der Bahnkurve 160 um, sodass abwechselnd der erste Schneidkopf 140 a und der zweite Schneidkopf 140 b zum Schneiden des Substrats S eingesetzt werden können, wie im Weiteren noch genauer erläutert werden wird. Aufgrund des gleichsinnigen Umlaufs sind geschwindigkeitsändernde Brems- oder Beschleunigungsvorgänge (jenseits von Richtungsänderungen) nicht erforderlich, sodass Erschütterungen, Vibrationen und ähnliche Störbewegungen im Wesentlichen vermieden werden können. Dadurch lassen sich besonders saubere und somit qualitativ hochwertige Schnitte bei hoher Geschwindigkeit und somit hohem Verarbeitungsdurchsatz erreichen. Dies wird des Weiteren dadurch gefördert, dass der Schneidvorgang berührungslos mittels gebündelter elektromagnetischer Strahlung, im vorliegenden Beispiel mittels eines Laserstrahls 125a, erfolgt.

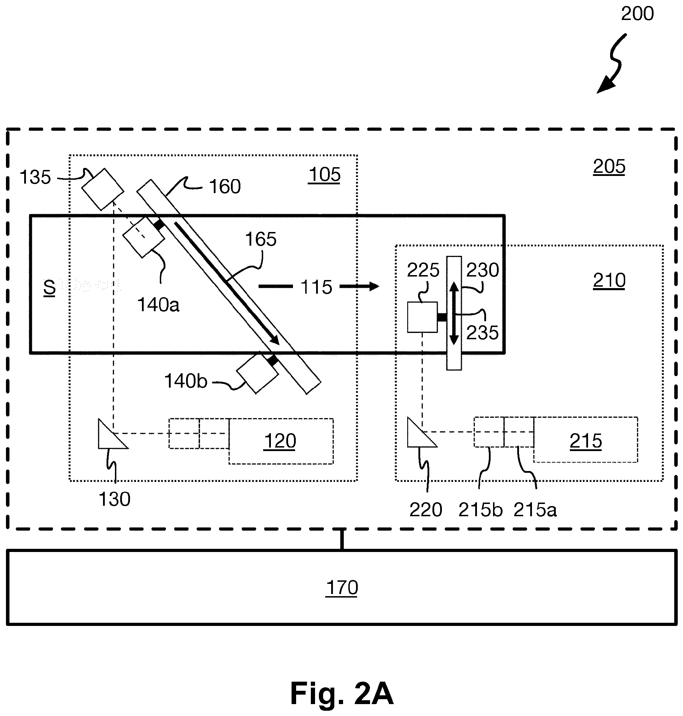

In **Fig. 2A** ist eine zweite Ausführungsform 200 einer Schneidvorrichtung in einer Aufsicht von oben illustriert. Sie weist neben dem Schneidmodul 105 und der Steuereinrichtung 170 ein weiteres Schneidmodul 210 auf. Die beiden Schneidmodule 105 und 210 bilden zusammen eine Schneidanordnung, die von der Steuereinrichtung 170 gesteuert wird. Die Bahnkurve 160 der Schneidköpfe 140a und 140b des Schneidmoduls 105 verläuft hier gegenüber der Transportrichtung 115 des Substrats S in einem Winkel, beispielsweise in einem Winkel von 45°. Dieser Winkel kann auch als einstellbarer Parameter der Schneidvorrichtung 200 vorgesehen sein (ebenso für die Schneidvorrichtung 100 aus Fig. 1). Wenn nun das Substrat entlang seiner Transportrichtung 115 transportiert wird, und sich gleichzeitig die Schneidköpfe 140a und 140b entlang ihrer Bahnkurve 160 umlaufend bewegen und dabei der jeweils dem Substrat zugewandte Schneidkopf mittels der durch ihn auf das Substrat S gerichteten Laserstrahlung einen Schneidvorgang entlang eines Schneidepfads ausführt, dann ist der Verlauf dieses Schneidepfads durch die Relativbewegung des jeweiligen Schneidkopfs 140a bzw. 140b zum Substrat S definiert, also durch die Überlagerung der Bewegungen einerseits des Schneidkopfs140a bzw. 140b und andererseits des Substrats S. Aufgrund der Anordnung der Bahnkurve ist das Schneidmodul 105 insbesondere zur Ausführung von Schnitten entlang einer die Transporteinrichtung 115 kreuzenden Richtung geeignet. Bei entsprechender Einstellung des Verhältnisses der Transportgeschwindigkeit für das Substrat S und der Umlaufgeschwindigkeit für die Schneidköpfe 140a bzw. 140b können so insbesondere orthogonal zur Transportrichtung 115 verlaufende geradlinige Schnitte hergestellt werden. Dazu muss das Verhältnis der Geschwindigkeiten so eingestellt werden, dass die zur Transportrichtung 115 parallele Komponente der Geschwindigkeit des Schneidkopfs 140a bzw. 140b der Transportgeschwindigkeit des Substrats S entspricht. Es ist jedoch auch möglich, durch Variation der Umlaufgeschwindigkeit und/oder der Transportgeschwindigkeit auch andere, insbesondere nichtgerade, z.B. gekrümmte, Schneidepfade zu erzeugen.

Das zweite Schneidmodul 210 weist eine weitere Laserstrahlungsquelle 215 mit einem Blendenverschluss (Shutter) 210a sowie einem Strahlaufweiter 210b auf. Diese Anordnung kann insbesondere derjenigen aus dem Schneidmodul 105 entsprechen. Des Weiteren weist das zweite Schneidmodul 210 in Analogie zum ersten Schneidmodul 105 einen ersten Umlenkspiegel 220 sowie einen Schneidkopf 225 auf, der an einer Trägeranordnung 230 beweglich angebracht ist, sodass er sich in einer orthogonal zur Transportrichtung 115 verlaufenden Richtung durch die Steuereinrichtung 170 gesteuert bewegen kann. Als Antrieb kann insbesondere ein Schrittmotor verwendet werden. Während für die Schneidköpfe 140a und 140b des ersten Schneidmoduls 105 eine umlaufende Bewegung vorgesehen ist, genügt für das Schneidmodul 210 eine lineare Bewegungsmöglichkeit für den Schneidkopf 225, denn diese Bewegungsmöglichkeit kann darauf beschränkt sein, den Schneidkopf 225 variabel in eine bestimmte gewünschte Position zu verfahren und dann dort stationär zu halten. Der Schneidepfad, der sich beim Schneiden des Substrats S mittels des Schneidkopfs 225 ergibt, ist dann durch die Position des Schneidkopfs 225 und die Transportrichtung 115 definiert, sodass sich parallel zur Transportrichtung 115 verlaufende Schneidpfade erzeugen lassen.

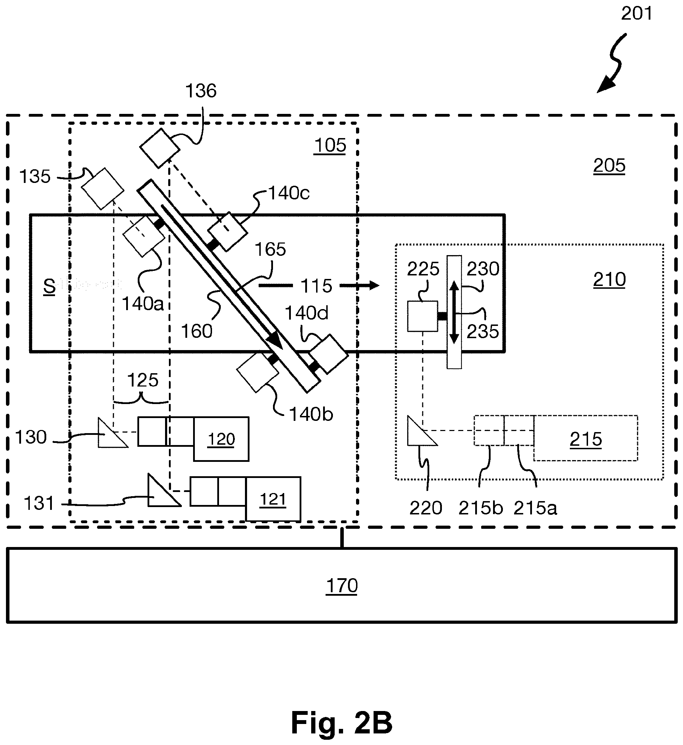

In **Fig. 2B** ist eine dritte Ausführungsform 201 einer Schneidvorrichtung in einer Aufsicht von oben illustriert. Sie ergibt sich als Abwandlung der Schneidvorrichtung 200, indem hier einige der Schneidköpfe, vorliegend die Schneidköpfe 140a und 140b, auf einer ersten Seite der, beispielsweise durch eine Schiene oder einen umlaufenden Riemen definierten, geschlossenen Bahnkurve 160 umlaufen, während einer oder mehrere weitere Schneidköpfe, vorliegend die Schneidköpfe 140c und 140d, auf einer zweiten, der ersten Seite gegenüberliegenden Seite der Bahnkurve 160 umlaufen.

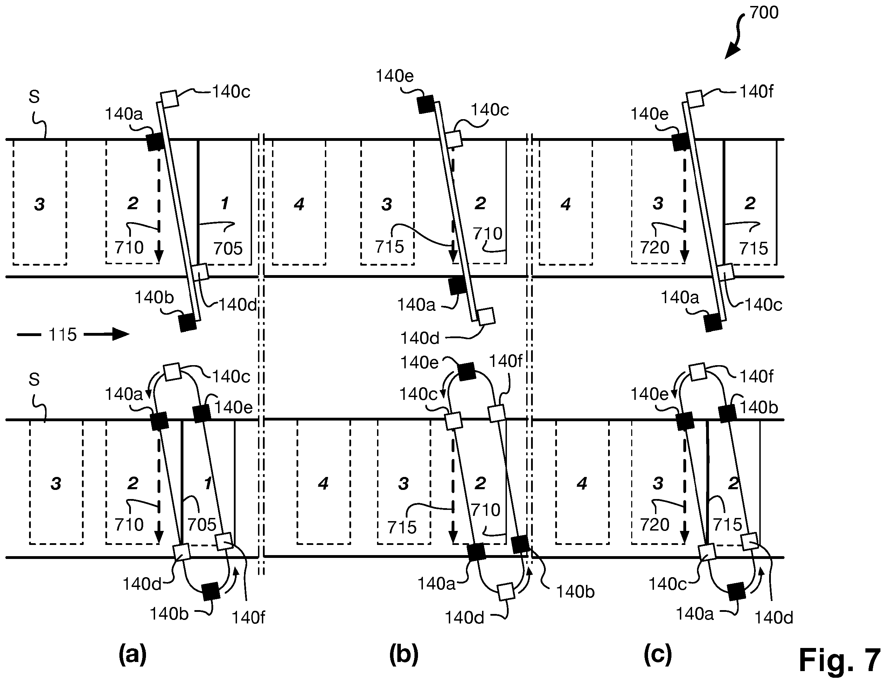

Bei der Schneidvorrichtung 201 ist für jede der beiden Seiten jeweils eine eigene Strahlungsquelle 120 bzw. 121 mit zugeordneten ersten Umlenkspiegeln 130 bzw. 131 und zweiten Umlenkspiegeln 135 bzw. 136 vorgesehen, sodass die zweite Seite dem Prinzip der ersten Seite entsprechend aufgebaut ist. Diese gemischte Anordnung der Schneidköpfe kann insbesondere zur weiteren Steigerung des möglichen Durchsatzes genutzt werden. Darauf wird im Weiteren unter Bezugnahme auf Fig. 7 genauer eingegangen werden.

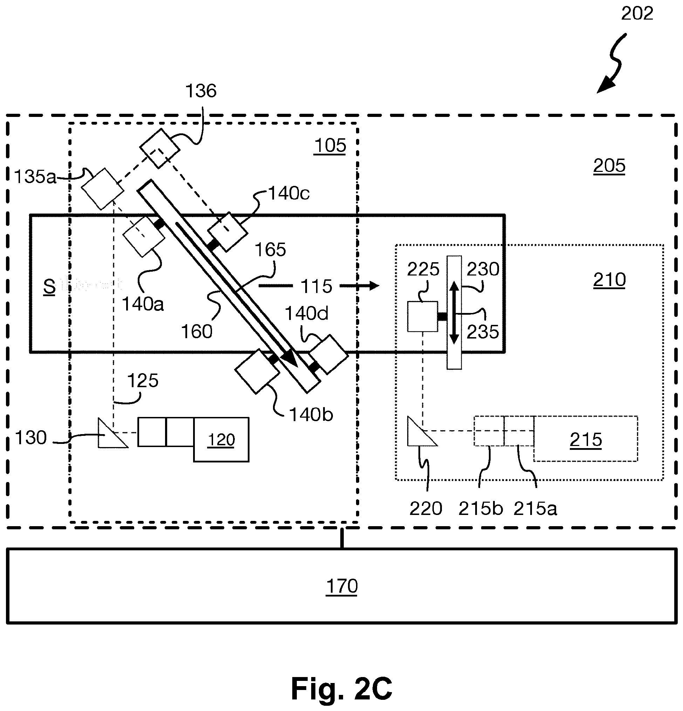

In **Fig. 2C** ist eine vierte Ausführungsform 202 einer Schneidvorrichtung in einer Aufsicht von oben illustriert. Sie ergibt sich als Abwandlung der Schneidvorrichtung 201 aus Fig. 2B, indem hier beide Seiten von einer selben Strahlungsquelle 120 versorgt werden. Dies gelingt, da der Umlenkspiegel 135 aus Fig 2B durch einen Strahlteiler 135a ersetzt ist, der einen Teil der einfallenden Strahlung per Spiegelung auf die erste Seite der Bahnkurve 160 umlenkt, wie dies auch beim Umlenkspiegel135 aus Fig 2B der Fall ist. Zugleich wird kann aber ein anderer Teil der einfallen Strahlung auf einen anderen Strahlungspfad gelenkt werden, der zum Umlenkspiegel 136 der zweiten Seite der Bahnkurve fällt, um dort je nach Stellung der Schneidköpfe der zweiten Seite auf einen von ihnen (z.B. den Schneidkopf 140c) gelenkt zu werden. So ergibt sich eine besonders platzsparende Anordnung, bei der dennoch das beidseitige Prinzip mit Schneidköpfen auf beiden Seiten der Bahnkurve 160 realisiert werden kann.

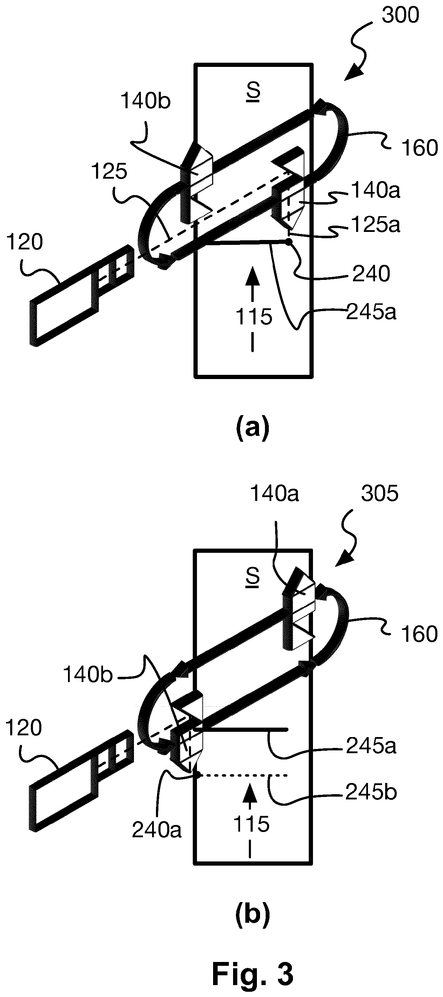

In Fig. 3 ist in einer schematischen Perspektivdarstellung illustriert, wie im Rahmen eines durch die Schneidvorrichtung 100 bzw. 200 aus den Figuren 1 oder 2 durchführbaren Schneidverfahrens mittels des jeweiligen Schneidmoduls 105 quer, insbesondere orthogonal, zur Transportrichtung 115 verlaufende Schnitte im Substrat S ausgeführt werden können.

**Teilfigur 3(a)** zeigt einen ersten Verfahrensabschnitt bei dem mittels des Schneidkopfs 140a während seiner Umlaufbewegung entlang der Bahnkurve 160 während des gleichzeitigen Transports des Substrats S entlang der Transportrichtung 115 mittels des durch den Schneidkopf 140a auf das Substrat S abgelenkten Laserstrahls 125a ein orthogonal zur Transportrichtung 115 verlaufender Schneidepfad 245a generiert wird, wodurch das Substrat S durch die Wirkung der Laserstrahlung entlang des Schneidepfads 245a geschnitten wird. In der in Teilfigur 3 (a) gezeigten Momentaufnahme ist dieser Schnitt bis zu einem momentanen Auftreffpunkt 240, an dem der Laserstrahl 125 momentan auf das Substrat S auftrifft, fortgeschritten.

Wenn der Schnitt beendet werden soll, weil etwa das Substrat bereits vollständig durchgetrennt ist, oder zuvor ein gewünschtes Ende des Schneidepfades 245a erreicht ist, wird der Laserstrahl 125 mittels des Blendenverschlusses 120a des Lasers 120 unterbrochen.

Während nach dem Ende dieses ersten Schnitts das Substrat S weiter entlang der Transportrichtung 115 bewegt wird, wird auch der synchrone Umlauf der beiden Schneidköpfe 140a und 140b fortgesetzt, sodass der Schneidkopf 140a aus einer dem Substrat zugewandten Schneidestellung in eine dem Substrat S abgewandte inaktive Stellung im oberen Bereich der Bahnkurve 160 bewegt wird, während gleichzeitig der zweite Schneidkopf 140 b in den unteren Bereich der Bahnkurve 160 einschwenkt und somit in eine dem Substrat S zugewandte Schneidestellung gebracht wird. Dies ist im Sinne einer Momentaufnahme in **Teilfigur 3(b)** illustriert. Der Schneidkopf 140b befindet sich hier gerade am Beginn des durch ihn vorzunehmenden Schneidepfads 245b, der momentane Auftreffpunkt 240a des durch ihn abgelenkten Laserstrahls 125a befindet sich an einer seitlichen Außenkante des Substrats S. Im Rahmen seiner weiteren Umlaufbewegung wird der Schneidkopf 140b nun in Analogie zu dem zuvor vom anderen Schneidkopf 140a gemäß Teilfigur 3(a) vorgenommenen Schnitt einen weiteren Schnitt des Substrats S entlang des Schneidepfades 245b vornehmen.

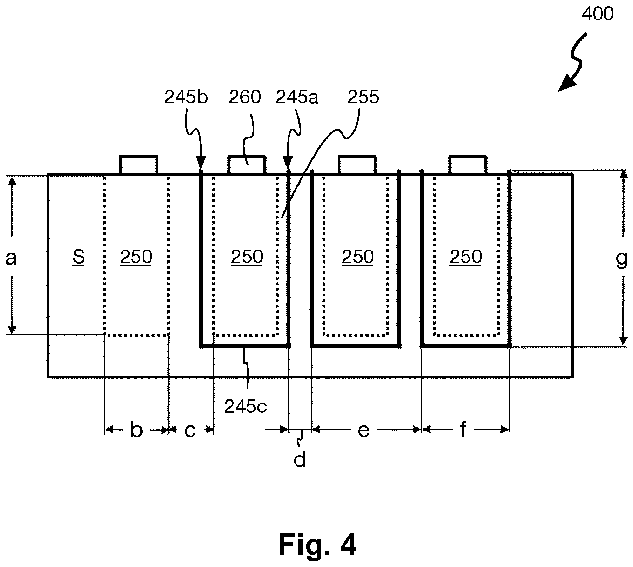

**Fig. 4** zeigt schematisch ein erstes beispielhaftes Schnittmuster zum Vereinzeln von Separatoren einschließlich einer darauf aufgebrachten Elektrodenschicht aus dem Substrat S unter Verwendung der Schneidvorrichtung 200 aus Fig. 2 und dem in Fig. 3 illustrierten Schneidverfahren.

Das Substrat S ist hier mehrschichtig ausgebildet und weist neben einer Separatorschicht, die insbesondere als Separatorfolie aus einem geeigneten Polymer ausgebildet sein kann, eine darauf bereits aufgebrachte Elektrodenschicht aus einem geeigneten Anoden- oder Kathodenmaterial sowie eine mit der Elektrodenschicht elektrisch leitend verbundene Stromableiterfahne 260 auf. Zusätzlich zu den beiden Schneidepfaden 245a und 245b wird durch das Schneidemodul 210 der Schneidvorrichtung 200 ein entlang der Transportrichtung 115 verlaufender weiterer Schneidepfad 245c als Schnittlinie erzeugt, der die beiden Schneidepfade 245a und 245b verbindet, sodass insgesamt eine durch die Schneidepfade 245a bis 245b gebildete, von einer seitlichen Außenkante des Substrats S ausgehende U-förmige Schnittlinie erzeugt wird, entlang der ein Teilstück des Substrats abgetrennt wird. Diese Schnittlinie wird somit durch das Zusammenwirken dreier verschiedener Schneidköpfe 140a, 140b und 225 erzeugt. Alternativ aber nicht gemäß der Erfindung wäre es jedoch auch möglich, dass die Schneidepfade 245a und 245b von demselben Schneidkopf 140a oder 140b gebildet werden. Die Verwendung dieser beiden Schneidköpfe, jeweils zur Herstellung eines der Schneidpfade 245a und 245b ist jedoch im Hinblick auf die Ermöglichung einer höheren Prozessgeschwindigkeit durch eine somit mögliche höhere Transportgeschwindigkeit für Substrat und somit eine kürzere Durchlaufzeit für das Schneiden des Substrats vorteilhaft.

Jedes mittels eines solchen U-förmigen Schnitts aus dem Substrat S heraus getrennte Teilstück weist somit eine Separatorschicht 255, die als Separator für ein galvanisches Element dienen kann, sowie eine darauf aufgebrachte Elektrodenschicht 250 (in Fig. 4 durch eine gestrichelte Linie gekennzeichnet) auf. Zweckmäßigerweise ragt die Separatorschicht 245 dabei über die Elektrodenschicht 250 hinaus, was in einem solchen Fall bereits beim Beschichten des Substrats S mit dem Elektrodenmaterial entsprechend berücksichtigt werden kann. In Fig. 4 sind noch Abmessungen a bis g eingezeichnet. Beispielhafte Werte für diese Abmessungen sind wie folgt: a = 512 mm oder 318 mm (entspricht jeweils einer anderen Bauform), b = 95 mm, c = 10 mm, d = 8 mm, i = 105 mm, f = 97 mm und, je nach Wahl von a, g = 514 mm oder 320 mm.

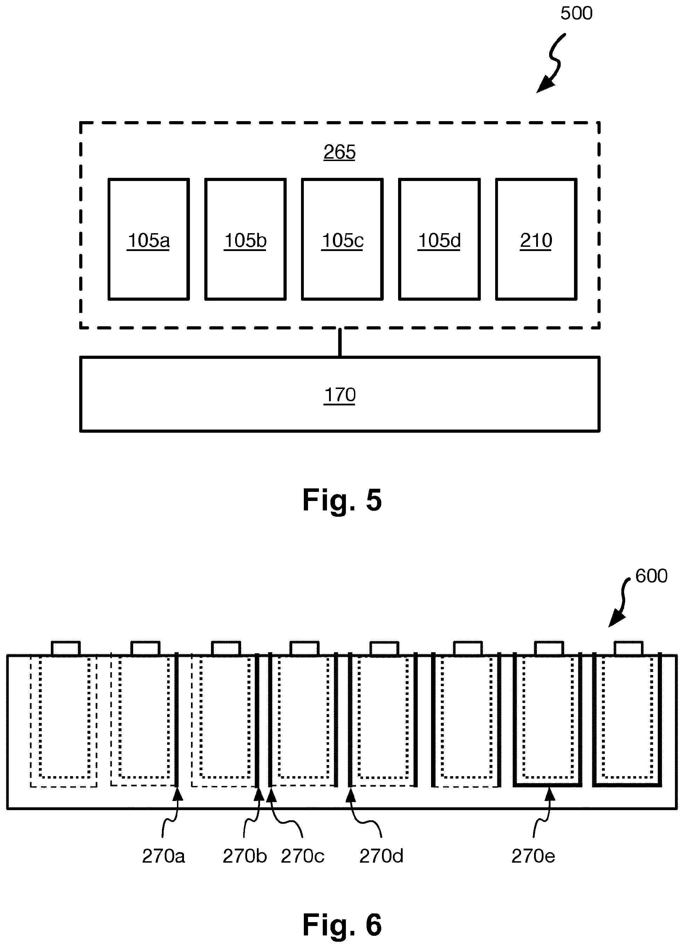

**Fig. 5** zeigt eine fünfte beispielhafte Ausführungsform 500 einer Schneidvorrichtung. Sie geht aus der Ausführungsform 200 dadurch hervor, dass sie anstelle nur eines Schneidmoduls 105 eine Schneideanordnung 265 mit einer Mehrzahl solcher Schneidmodule, insbesondere wie hier illustriert mit vier Schneidmodulen 105a bis 105d, die jeweils einem Schneidmodul 105 gemäß Fig. 1 oder Fig. 2 entsprechen, sowie weiterhin das Schneidmodul 210 aufweist. Die Schneidvorrichtung 500 ist somit insbesondere dahingehend optimiert, dass in schneller Abfolge mehrere quer zur Transportrichtung 115 des Substrats S verlaufende Schnitte vorgenommen werden können.

In **Fig. 6** ist ein beispielhaftes zweites Schnittmuster 600 illustriert, welches insbesondere mit der Vorrichtung 500 aus Fig. 5 generiert werden kann. Wieder soll hier beispielhaft, wie bei Fig. 4, das Abtrennen von Teilstücken aus einem Substrat S betrachtet werden, welches eine Separatorfolie und optional eine bereits darauf befindliche Elektrodenschicht aufweist.

Das Zusammenwirken der verschiedenen Schneidmodule zum Erzeugen des Schnittmusters 600 kann hier wie folgt verlaufen: ein erster orthogonal zur Bewegungsrichtung verlaufender Schneidepfad 270 a wird vom Schneidmodul 105a ausgeführt, ein zweiter gleichgerichteter Schneidepfad 270b vom zweiten Schneidmodul 105b, ein dritter gleichgerichteter Schneidepfad 270c vom Schneidmodul 105c und ein vierter gleichgerichteter Schneidepfad 270d vom Schneidmodul 105d. Die jeweils entlang der Transportrichtung 115 verlaufenden Schnitte zur Verbindung von je zwei der Schneidpfade 270a bis 270d zu einer U-förmigen Schnittlinie erfolgen wie gehabt durch das Schneidmodul 210.

Alternativ ist es auch hier wieder möglich, dass stattdessen die beiden quer, insbesondere orthogonal zur Transportrichtung 115 verlaufenden Schneidepfade, zum Beispiel 270a und 270b nicht durch verschiedene Schneidmodule, sondern durch zwei verschiedene Schneidköpfe 140a und 140b desselben Schneidmoduls ausgeführt werden. Es ist sogar möglich, aber nicht gemäß der Erfindung, dass beide von ein und demselben Schneidkopf 140a bzw. 140b ausgeführt werden. Allerdings ist die vorausgehend beschriebene Verwendung von drei verschiedenen Schneidköpfen, insbesondere sogar Schneidmodulen, zur Erzeugung einer U-förmigen Schnittlinie im Hinblick auf einen damit erreichbaren besonders hohen Durchsatz vorteilhaft.

In **Fig. 7** ist die Herstellung 700 eines beispielhaften dritten Schnittmusters illustriert, welches insbesondere mit der Vorrichtung 201 aus Fig. 2B oder Vorrichtung 202 aus Fig. 2C generiert werden kann. Hier sind beispielhaft sechs Schneidköpfe 140a-f vorgesehen, von denen drei (Schneidköpfe 140a, 140b, 140e) auf der linken Seite und drei andere (Schneidköpfe 140c, 140d, 140f) auf der rechten Seite der Bahnkurve 160 umlaufen. Wieder soll hier beispielhaft, wie bei Fig. 4, das Abtrennen von Teilstücken aus einem Substrat S betrachtet werden, welches eine Separatorfolie und optional eine bereits darauf befindliche Elektrodenschicht aufweist. Zur Vereinfachung der Zeichnung sind hier die Stromableiterfahnen 260 nicht eingezeichnet.

Fig. 7 weist drei Teilfiguren 7 (a), (b) und (c) auf, die einen zeitlichen Ablauf in drei aufeinanderfolgenden Schritten des Verfahrens zum Herstellen des dritten Schnittmusters illustrieren. Im oberen Teil der jeweiligen Teilfigur ist eine Aufsicht der tatsächlichen Anordnung von oben gezeigt, während im unteren Teil der jeweiligen Teilfigur zum selben Schritt die Ablenkeinrichtung zum Zweck der besseren Erläuterung um 90° gegenüber der tatsächlichen Anordnung geschwenkt dargestellt ist. Da in Illustration einige Schneidköpfe momentan übereinander liegen, sind im oberen Bereich der Fig. 7 nur jeweils vier der sechs Schneidköpfe zu sehen. Ähnlich zu Fig. 4 sollen hier beispielhaft mehrere aufeinanderfolgende U-förmige Schnitte ausgeführt werden, die mit den Zahlen 1 bis 4 usw. durchnummeriert sind.

**Teilfigur 7(a)** beschreibt einen Zustand der Vorrichtung 201 oder 202, bei dem die beiden senkrecht zur Transportrichtung 115 des Substrats S verlaufenden Teilschnitte für den U-förmigen Schnitt 1 bereits ausgeführt wurden, wobei zuletzt der "linke" Teilschnitt 705 durch den Schneidkopf 140d, der auf der "rechten" Seite der Bahnkurve 160 umläuft, ausgeführt wurde und gerade beendet wird. Zugleich oder mit geringen einem zeitlichen Versatz, kommt nun der weitere Schneidkopf 140a, der auf der "linken" Seite der Bahnkurve 160 umläuft, in eine Schneideposition, um von dort aus den Schneidepfad 710 zu durchlaufen und somit als nächstes den "rechten" Teilschnitt des U-förmigen Schnitts 2 auszuführen. Der jeweils als nächstes auszuführende Teilschnitt ist in den Teilfiguren jeweils als gestrichelter dicker Pfeil dargestellt, während schon erfolgte Schnitte mit durchgezogenen Linien und erst später auszuführende Schnitte mit gestrichelten Linien dargestellt sind.

**Teilfigur 7(b)** beschreibt einen nachfolgenden weiteren Zustand der Vorrichtung 201 oder 202, bei dem der Teilschnitt 710 bereits fertig ausgeführt wurde und als nächstes der "linke" Teilschnitt 715 des U-förmigen Schnitts 2 auszuführen ist. Dazu kommt der der weitere Schneidkopf 140c, der auf der "rechten" Seite der Bahnkurve 160 umläuft, zum Einsatz.

**Teilfigur 7(c)** beschreibt einen noch weiter nachfolgenden Zustand der Vorrichtung 201 oder 202, bei dem der Teilschnitt 715 bereits fertig ausgeführt wurde und als nächstes der "rechte" Teilschnitt 720 des nächstfolgenden U-förmigen Schnitts 3 auszuführen ist. Dazu kommt der der weitere Schneidkopf 140e, der auf der "linken" Seite der Bahnkurve 160 umläuft, zum Einsatz.

Insgesamt kommt hier somit ein Verfahren zum Einsatz, bei dem für die "linken" Teilschnitte jeweils Schneidköpfe 140c, 140d, 140f eingesetzt werden, die auf der "rechten" Seite der Bahnkurve 160 umlaufen, und bei dem andererseits für die "rechten" Teilschnitte jeweils Schneidköpfe 140a, 140b, 140e eingesetzt werden, die auf der "linken" Seite der Bahnkurve 160 umlaufen. So lässt sich der auf die Transportrichtung 115 bezogene räumliche Versatz zwischen den linken und den rechten Schneidköpfen nutzen um sehr schnell, insbesondere unmittelbar nachfolgend oder sogar zeitlich überlappend, aufeinanderfolgende Schnitte (im vorliegenden Beispiel: Teilschnitte) auszuführen und somit einen hohen Durchsatz zu erreichen.

Es ist zudem auch hier möglich, entsprechend Fig. 5 eine Schneideanordnung mit einer Mehrzahl von hintereinander geschalteten Schneidmodulen vorzusehen, die jeweils einem Schneidmodul gemäß Fig. 2B oder Fig. 2C entsprechen. Die resultierende Schneidvorrichtung ist dann insbesondere dahingehend optimiert, dass eine weitere Erhöhung des Durchsatzes möglich wird. Insbesondere kann dies so erfolgen, dass der jeweils erste Teilschnitt je U-förmigen Schnitt immer mit beidseitig einer ersten Bahnkurve angeordneten Schneidköpfen und der zweite dazu parallele Teilschnitt immer mit beidseitig einer zweiten, entlang der Transportrichtung 115 stromabwärts gelegenen Bahnkurve angeordneten Schneidköpfen ausgeführt wird. So lassen sich noch weitere Durchsatzsteigerungen erreichen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: Schneidvorrichtung, erste Ausführungsform
- 105: Schneidmodul, insbesondere für Querschnitte
- 105a-d: Schneidmodule, insbesondere für Querschnitte, mit je einer Bahnkurve
- 110: Transporteinrichtung
- 110a,b: Rollen der Transporteinrichtung
- 115: Transportrichtung des Substrats
- 120: (erste) Strahlungsquelle, insbesondere Laser
- 121: (zweite) Strahlungsquelle, insbesondere Laser
- 120a: Blendenverschluss (Shutter)
- 120b: Strahlaufweiter
- 125: Laserstrahl(en)
- 125a: im Schneidkopf abgelenkter Laserstrahl
- 130: erster Umlenkspiegel (für erste Strahlungsquelle)
- 131: erster Umlenkspiegel (für zweite Strahlungsquelle)
- 135: zweiter Umlenkspiegel (für erste Strahlungsquelle)
- 135a: Strahlteiler, zugleich zweiter Umlenkspiegel (für erste Strahlungsquelle)
- 136: zweiter Umlenkspiegel (für zweite Strahlungsquelle)
- 140a-f: Schneidköpfe
- 145a,b: dritter Umlenkspiegel, am jeweiligen Schneidkopf
- 150a,b: Schneidkopfkörper
- 155a,b: Fokussieroptik
- 160: Bahnkurve
- 165: Bewegungs- bzw. Umlaufrichtung der Schneidköpfe
- 170: Steuereinrichtung
- 200: Schneidvorrichtung, zweite Ausführungsform
- 201: Schneidvorrichtung, dritte Ausführungsform
- 202: Schneidvorrichtung, vierte Ausführungsform
- 205: Schneidanordnung mit zwei Schneidmodulen
- 210: Schneidmodul, insbesondere für Längsschnitte
- 215: Strahlungsquelle, insbesondere Laser für Schneidmodul 210
- 215a: Shutter (Blendenverschluss)
- 215b: Strahlaufweiter
- 220: Umlenkspiegel des Schneidmoduls 210
- 225: Schneidkopf des Schneidmoduls 210
- 230: Trägeranordnung für Schneidkopf 225
- 235: einstellbare Position des Schneidkopfs 225 an der Trägeranordnung 230
- 240: Auftreffpunkt
- 245a: erster Schneidepfad
- 245b: zweiter Schneidepfad
- 245c: dritter Schneidepfad
- 250: Elektrodenschicht
- 255: Separator(schicht)
- 260: Stromableiterfahne
- 265: Schneidanordnung mit fünf Schneidmodulen
- 270a-e: Schneidepfade zum zweiten Schnittmuster
- 300: erster Verfahrensabschnitt
- 305: zweiter Verfahrensabschnitt
- 400: erstes Schnittmuster
- 500: Schneidvorrichtung, fünfte Ausführungsform
- 600: zweites Schnittmuster
- 700: Verfahren zu Herstellung eines dritten Schnittmusters
- 705-720: Schneidepfade des dritten Schnittmusters
- S: Substrat, insbesondere Separatorfolie mit oder ohne Elektrodenschicht 250
- a-g: Abmessungen
- **1,...,4**: auszuschneidende Abschnitte beim dritten Schnittmuster

## Patentansprüche

1. Vorrichtung (100; 200; 201; 202; 300) zum Schneiden eines Substrats (S) mittels gebündelter elektromagnetischer Strahlung, wobei die Vorrichtung (100; 200; 201; 202; 300) aufweist:
eine Transporteinrichtung (110) zum Transportieren des Substrats (S) entlang eines Transportpfads;
eine Ablenkeinrichtung mit mehreren jeweils entlang einer geschlossenen Bahnkurve (160) unidirektional umlaufend verfahrbaren Schneidköpfen (140a; 140b), wobei die Ablenkeinrichtung konfiguriert ist, während das Substrat (S) von der Transporteinrichtung (110) entlang des Transportpfads transportiert wird, eine auf den jeweiligen Schneidkopf (140a; 140b) einfallende elektromagnetische Strahlung mittels dieses Schneidkopfs (140a; 140b) als gebündelten elektromagnetischen Strahl (125, 125a) auf eine Oberfläche des Substrats (S) abzulenken; und
eine Steuereinrichtung, die konfiguriert ist, die Ablenkeinrichtung und/oder die Transporteinrichtung (110) auf solche Weise anzusteuern, dass der jeweilige abgelenkte Strahl, während der zugehörige Schneidkopf (140a; 140b) entlang eines Abschnitts seiner Bahnkurve (160) verfahren und das Substrat von der Transporteinrichtung (110) entlang des Transportpfads transportiert wird, bei seinem Auftreffen auf der Oberfläche des Substrats (S) dort einen relativ zum Substrat (S) wandernden bestrahlten Auftreffpunkt (240; 240a) bildet, der auf der Oberfläche des Substrats (S) einen definierten Schneidepfad (245a; 245b) durchläuft, um das Substrat (S) entlang des Schneidepfads (245a; 245b) zu schneiden, **dadurch gekennzeichnet, dass**
die Steuereinrichtung konfiguriert ist, die Ablenkeinrichtung und die Transporteinrichtung (110) auf koordinierte Weise so anzusteuern, dass sich die jeweiligen Schneidepfade (245a; 245b; 245c) von zumindest zwei Schneidköpfen (140a; 140b, 225) der Vorrichtung auf der Oberfläche des Substrats (S) berühren oder überschneiden, um einen kombinierten zusammenhängenden Schneidepfad (245a; 245b, 245c) zu bilden.

2. Vorrichtung (100; 200; 201; 202; 300) nach Anspruch 1, wobei:
die Ablenkeinrichtung so konfiguriert ist, dass die Bahnkurve (160) zumindest eines Schneidkopfs (140a; 140b) zumindest einen Abschnitt aufweist, in dem sie schräg zum Transportpfad verläuft; und
die Steuereinrichtung konfiguriert ist, die Ablenkeinrichtung und die Transporteinrichtung (110) so anzusteuern, dass sich ein zumindest abschnittsweise geradliniger Schneidepfad (245a; 245b) ergibt, während das Substrat (S) mittels der Transporteinrichtung (110) entlang des Transportpfads transportiert wird und sich dieser Schneidkopf (140a; 140b) entlang des Abschnitts seiner Bahnkurve (160) bewegt und dabei die auf ihn einfallende Strahlung auf die Oberfläche des Substrats (S) ablenkt;
wobei optional die Steuereinrichtung konfiguriert ist, die Ablenkeinrichtung und die Transporteinrichtung (110) auf koordinierte Weise so anzusteuern, dass der Transport des Substrats (S) mittels der Transporteinrichtung (110) entlang des Transportpfads und die gleichzeitige Bewegung des Schneidkopfs (140a; 140b) entlang des Abschnitts seiner Bahnkurve (160) jeweils mit konstanter Geschwindigkeit erfolgen.

3. Vorrichtung (100; 200; 201; 202; 300) nach einem der vorausgehenden Ansprüche, wobei zumindest ein Schneidkopf (140a; 140b) zur Wandlung der auf ihn einfallenden elektromagnetischen Strahlung in einen abgelenkten gebündelten elektromagnetischen Strahl (125, 125a) einen Umlenkspiegel sowie eine Fokussieroptik (155a; 155b) aufweist.

4. Vorrichtung (100; 200; 201; 202; 300) nach einem der vorausgehenden Ansprüche, aufweisend zumindest eine Strahlungsquelle (120) zur Erzeugung der mittels des zumindest einen Schneidkopfes (140a; 140b) abzulenkenden elektromagnetischen Strahlung;
wobei optional zumindest eine Strahlungsquelle (120) eine Laserstrahlungsquelle (120), optional einen Kohlenstoffdioxidlaser aufweist.

5. Vorrichtung (100; 200; 201; 202; 300) nach einem der vorausgehenden Ansprüche, wobei die Bahnkurve (160) von zumindest einem Schneidkopf (140a; 140b) in einer Ebene verläuft;
wobei optional die Bahnkurve (160) des zumindest einen Schneidkopfs (140a; 140b) eine ovale oder elliptische Form aufweist.

6. Vorrichtung (100; 200; 201; 202; 300) nach Anspruch 5, wobei die Transporteinrichtung (110) eine ebene Bahnfläche definiert, auf oder entlang der sie das Substrat (S) fördern kann, und die Ebene, in der die Bahnkurve (160) des zumindest einen Schneidkopfs (140a; 140b) verläuft, parallel zu der ebenen Bahnfläche verläuft.

7. Vorrichtung (100; 200; 201; 202; 300) nach Anspruch 5, wobei
die Transporteinrichtung (110) eine ebene Bahnfläche definiert, auf oder entlang der sie das Substrat (S) fördern kann; und
die Ebene, in der die Bahnkurve (160) des zumindest einen Schneidkopfs (140a; 140b) verläuft, und die ebene Bahnfläche nicht parallel zueinander liegen.

8. Vorrichtung (100; 200; 201; 202; 300) nach einem der vorausgehenden Ansprüche, wobei die Ablenkeinrichtung zumindest zwei Schneidköpfe (140a, 140b) aufweist, deren Bahnkurven (160) zusammenfallen.

9. Vorrichtung (100; 200; 201; 202; 300) nach einem der vorausgehenden Ansprüche, wobei die Ablenkeinrichtung zumindest zwei Schneidköpfe (140a, 140c) aufweist, deren Bahnkurven sich unterscheiden.

10. Vorrichtung (100; 200; 201; 202; 300) nach einem der vorausgehenden Ansprüche, wobei die Steuereinrichtung konfiguriert ist, die Ablenkeinrichtung und die Transporteinrichtung (110) auf koordinierte Weise so anzusteuern, dass sich auf der Oberfläche des Substrats (S) ein zumindest abschnittsweise U-förmiger Schneidepfad (245a; 245b, 245c) als Schneidepfad (245a; 245b, 245c) eines einzigen Schneidkopfs (140a; 140b) oder als ein aus mehreren sich berührenden oder überschneidenden Schneidepfaden (245a; 245b; 245c) von zumindest zwei verschiedenen Schneidköpfen (140a; 140b; 225) gebildeter kombinierter zusammenhängender Schneidepfad (245a, 245b, 245c) ergibt.

11. Vorrichtung (201; 202) nach einem der vorausgehenden Ansprüche, wobei die Ablenkeinrichtung zwei oder mehr jeweils entlang der geschlossenen Bahnkurve (160) unidirektional umlaufend verfahrbare Schneidköpfe (140a-140f) aufweist, von denen zumindest einer konfiguriert ist, auf einer ersten Seite der geschlossenen Bahnkurve (160) umzulaufen, während zumindest ein anderer der Schneidköpfe konfiguriert ist, auf einer zweiten, der ersten Seite gegenüberliegenden Seite der Bahnkurve (160) umzulaufen;
wobei optional die Schneidköpfe beider Seiten konfiguriert sind, entlang der Bahnkurve (160) räumlich zueinander versetzt und synchron umzulaufen, derart, dass je Umlauf zumindest ein Schneidkopf auf der ersten Seite und ein Schneidkopf auf der zweiten Seite jeweils zum Schneiden des Substrats entlang eines jeweils zugeordneten Schneidpfads mit der elektromagnetischen Strahlung bestrahlt werden.

12. Verfahren zum Schneiden eines Substrats (S) mittels gebündelter elektromagnetischer Strahlung, wobei das Verfahren aufweist:
Transportieren des Substrats (S) entlang eines Transportpfads mittels einer Transporteinrichtung (110);
Ablenken von elektromagnetischer Strahlung auf das Substrat (S) mittels einer Ablenkeinrichtung mit mehreren jeweils entlang einer geschlossenen Bahnkurve (160) unidirektional umlaufend verfahrbaren Schneidköpfen während das Substrat (S) entlang des Transportpfads transportiert wird, wobei eine auf den jeweiligen Schneidkopf (140a; 140b) einfallende elektromagnetische Strahlung mittels dieses Schneidkopfs (140a; 140b) als gebündelter elektromagnetischer Strahl (125, 125a) auf eine Oberfläche des Substrats (S) abgelenkt wird und die Ablenkeinrichtung und/oder die Transporteinrichtung (110) auf solche Weise angesteuert werden, dass der jeweilige abgelenkte Strahl, während der zugehörige Schneidkopf (140a; 140b) entlang seiner Bahnkurve (160) verfahren und das Substrat (S) von der Transporteinrichtung (110) entlang des Transportpfads transportiert wird, bei seinem Auftreffen auf der Oberfläche des Substrats (S) dort einen definierten Schneidepfad (245a; 245b) durchläuft, um das Substrat (S) entlang des Schneidepfads (245a; 245b) zu schneiden,
**dadurch gekennzeichnet, dass**
das Schneiden des Substrats (S) so ausgeführt wird, dass dadurch aus dem Substrat (S) ein oder mehrere Teilstücke entlang einer jeweiligen durch den bzw. die Schneidepfade definierten Schnittlinie abgetrennt werden, wobei:
zum Abtrennen zumindest eines Teilstücks zumindest zwei Schneidköpfe (140a, 140b, 225) eingesetzt werden;
der bzw. jeder jeweilige Schneidepfad (245a; 245b; 245c) jedes dieser Schneidköpfe (140a, 140b, 225) nur einen Streckenabschnitt der Schnittlinie bildet, ohne diese bereits vollständig zu durchlaufen; und
sich die Schneidepfade (245a; 245b; 245c) dieser Schneidköpfe (140a, 140b, 225) insgesamt zur vollständigen Schnittlinie ergänzen.

13. Verfahren nach Anspruch 12, wobei als das zu schneidende Substrat (S) ein entlang des Transportpfads transportiertes bahnartiges Substrat (S) verwendet wird und das Schneiden so erfolgt, dass die Schnittlinie für zumindest ein Teilstück des Substrats (S) zwischen zwei Endpunkten der Schnittlinie verläuft, die voneinander beabstandet auf einer selben Außenkante des Substrats (S) liegen.

14. Verfahren nach einem der Ansprüche 12 oder 13, wobei:
als das zu schneidende Substrat (S)ein Substrat verwendet wird, das eine als Separator (255) für galvanische Elemente geeignete Materialschicht aufweist; und durch das Schneiden des Substrats (S) daraus ein oder mehrere Bauteile für galvanische Elemente vereinzelt werden;
wobei optional als das zu schneidende Substrat (S) ein Substrat mit mehreren aufeinander gestapelten Schichten verwendet wird, von denen eine die als Separator (255) für galvanische Elemente geeignete Materialschicht ist und eine dazu benachbart liegende weitere Schicht ein Elektrodenmaterial für ein galvanisches Element ist.

15. Verfahren nach einem der Ansprüche 12 bis 14, wobei zum Schneiden des Substrats (S) eine Vorrichtung (100; 200; 201; 202; 300) nach einem der Ansprüche 1 bis 16 verwendet wird.

## Claims

1. Apparatus (100; 200; 201; 202; 300) for cutting a substrate (S) by means of focused electromagnetic radiation, wherein the apparatus (100; 200; 201; 202; 300) comprises:
a transport device (110) for transporting the substrate (S) along a transport path;
a deflection device with a plurality of cutting heads (140a; 140b) which can be moved in a unidirectionally circulating manner in each case along a closed path curve (160), wherein the deflection device is configured, while the substrate (S) is being transported by the transport device (110) along the transport path, to deflect electromagnetic radiation incident on the respective cutting head (140a; 140b) onto a surface of the substrate (S) by means of this cutting head (140a; 140b) as a focused electromagnetic beam (125, 125a); and
a control device which is configured to control the deflection device and/or the transport device (110) in such a way that the respective deflected beam, while the associated cutting head (140a; 140b) is being moved along a section of its path curve (160) and the substrate is being transported by the transport device (110) along the transport path, when it impinges on the surface of the substrate (S) forms there an irradiated impingement point (240; 240a) which migrates relative to the substrate (S) and which passes on the surface of the substrate (S) through a defined cutting path (245a; 245b) in order to cut the substrate (S) along the cutting path (245a; 245b),
**characterized in that**
the control device is configured to control the deflection device and the transport device (110) in a coordinated manner such that the respective cutting paths (245a; 245b; 245c) of at least two cutting heads (140a; 140b, 225) of the apparatus touch or intersect on the surface of the substrate (S) in order to form a combined continuous cutting path (245a; 245b, 245c).

2. Apparatus (100; 200; 201; 202; 300) according to Claim 1, wherein:
the deflection device is configured such that the path curve (160) of at least one cutting head (140a; 140b) has at least one section in which it runs obliquely with respect to the transport path; and
the control device is configured to control the deflection device and the transport device (110) such that a cutting path (245a; 245b) which is rectilinear at least in sections is produced while the substrate (S) is being transported by means of the transport device (110) along the transport path and this cutting head (140a; 140b) moves along the section of its path curve (160) and in the process deflects the radiation incident on it onto the surface of the substrate (S);
wherein optionally the control device is configured to control the deflection device and the transport device (110) in a coordinated manner such that the transport of the substrate (S) by means of the transport device (110) along the transport path and the simultaneous movement of the cutting head (140a; 140b) along the section of its path curve (160) take place in each case at a constant speed.

3. Apparatus (100; 200; 201; 202; 300) according to any one of the preceding claims, wherein at least one cutting head (140a; 140b) for converting the electromagnetic radiation incident on it into a deflected focused electromagnetic beam (125, 125a) comprises a deflection mirror and a focusing optical unit (155a; 155b).

4. Apparatus (100; 200; 201; 202; 300) according to any one of the preceding claims, comprising at least one radiation source (120) for generating the electromagnetic radiation to be deflected by means of the at least one cutting head (140a; 140b);
wherein optionally at least one radiation source (120) comprises a laser radiation source (120), optionally a carbon dioxide laser.

5. Apparatus (100; 200; 201; 202; 300) according to any one of the preceding claims, wherein the path curve (160) of at least one cutting head (140a; 140b) runs in a plane;
wherein optionally the path curve (160) of the at least one cutting head (140a; 140b) has an oval or elliptical shape.

6. Apparatus (100; 200; 201; 202; 300) according to Claim 5, wherein the transport device (110) defines a planar path surface on or along which it can convey the substrate (S), and the plane in which the path curve (160) of the at least one cutting head (140a; 140b) runs is parallel to the planar path surface.

7. Apparatus (100; 200; 201; 202; 300) according to Claim 5, wherein
the transport device (110) defines a planar path surface on or along which it can convey the substrate (S); and
the plane in which the path curve (160) of the at least one cutting head (140a; 140b) runs and the planar path surface are not parallel to one another.

8. Apparatus (100; 200; 201; 202; 300) according to any one of the preceding claims, wherein the deflection device comprises at least two cutting heads (140a, 140b), the path curves (160) of which coincide.

9. Apparatus (100; 200; 201; 202; 300) according to any one of the preceding claims, wherein the deflection device comprises at least two cutting heads (140a, 140c), the path curves of which differ.

10. Apparatus (100; 200; 201; 202; 300) according to any one of the preceding claims, wherein the control device is configured to control the deflection device and the transport device (110) in a coordinated manner such that a cutting path (245a; 245b, 245c) which is U-shaped at least in sections is produced on the surface of the substrate (S) as a cutting path (245a; 245b, 245c) of a single cutting head (140a; 140b) or as a combined continuous cutting path (245a, 245b, 245c) formed from a plurality of touching or intersecting cutting paths (245a; 245b; 245c) of at least two different cutting heads (140a; 140b; 225).

11. Apparatus (201; 202) according to any one of the preceding claims, wherein the deflection device comprises two or more cutting heads (140a-140f) which can be moved in a unidirectionally circulating manner in each case along the closed path curve (160), at least one of which is configured to circulate on a first side of the closed path curve (160), while at least one other of the cutting heads is configured to circulate on a second side of the path curve (160) which is opposite the first side;
wherein optionally the cutting heads of both sides are configured to circulate along the path curve (160) in a manner spatially offset with respect to one another and synchronously in such a manner that, per circulation, at least one cutting head on the first side and one cutting head on the second side are irradiated with the electromagnetic radiation in each case for cutting the substrate along a respectively assigned cutting path.

12. Method for cutting a substrate (S) by means of focused electromagnetic radiation, the method comprising:
transporting the substrate (S) along a transport path by means of a transport device (110);
deflecting electromagnetic radiation onto the substrate (S) by means of a deflection device with a plurality of cutting heads which can be moved in a unidirectionally circulating manner in each case along a closed path curve (160) while the substrate (S) is being transported along the transport path, wherein electromagnetic radiation incident on the respective cutting head (140a; 140b) is deflected onto a surface of the substrate (S) by means of this cutting head (140a; 140b) as a focused electromagnetic beam (125, 125a), and the deflection device and/or the transport device (110) are controlled in such a way that the respective deflected beam, while the associated cutting head (140a; 140b) is being moved along its path curve (160) and the substrate (S) is being transported by the transport device (110) along the transport path, when it impinges on the surface of the substrate (S) passes there through a defined cutting path (245a; 245b) in order to cut the substrate (S) along the cutting path (245a; 245b),
**characterized in that**
the cutting of the substrate (S) is carried out in such a way that, as a result, one or more portions are severed from the substrate (S) along a respective cutting line defined by the cutting path or paths, wherein:
at least two cutting heads (140a, 140b, 225) are used for severing at least one portion;
the or each respective cutting path (245a; 245b; 245c) of each of these cutting heads (140a, 140b, 225) forms only a section of the cutting line without already passing completely through it; and
the cutting paths (245a; 245b; 245c) of these cutting heads (140a, 140b, 225) complement one another overall to form the complete cutting line.

13. Method according to Claim 12, wherein a web-like substrate (S) transported along the transport path is used as the substrate (S) to be cut and the cutting takes place in such a way that the cutting line for at least one portion of the substrate (S) runs between two end points of the cutting line which are spaced apart from one another on a same outer edge of the substrate (S).

14. Method according to Claim 12 or 13, wherein:
a substrate which comprises a material layer suitable as a separator (255) for galvanic elements is used as the substrate (S) to be cut; and one or more components for galvanic elements are singulated therefrom by the cutting of the substrate (S);
wherein optionally a substrate with a plurality of layers stacked one on top of the other is used as the substrate (S) to be cut, of which one is the material layer suitable as a separator (255) for galvanic elements and a further layer lying adjacent thereto is an electrode material for a galvanic element.

15. Method according to any one of Claims 12 to 14, wherein an apparatus (100; 200; 201; 202; 300) according to one of Claims 1 to 16 is used for cutting the substrate (S).

## Revendications

1. Dispositif (100 ; 200 ; 201 ; 202 ; 300) pour découper un substrat (S) au moyen d'un rayonnement électromagnétique focalisé, le dispositif (100; 200 ; 201; 202; 300) comprenant :
un dispositif de transport (110) pour transporter le substrat (S) le long d'un trajet de transport ;
un dispositif de déviation avec plusieurs têtes de découpe (140a ; 140b) pouvant être déplacées chacune le long d'une courbe de trajectoire fermée (160) de manière à tourner de manière unidirectionnelle, le dispositif de déviation étant configuré, pendant que le substrat (S) est transporté par le dispositif de transport (110) le long du trajet de transport, pour dévier un rayonnement électromagnétique incident sur la tête de découpe respective (140a ; 140b) au moyen de cette tête de découpe (140a ; 140b) sous forme de faisceau électromagnétique focalisé (125, 125a) sur une surface du substrat (S) ; et
un dispositif de commande, qui est configuré pour commander le dispositif de déviation et/ou le dispositif de transport (110) de telle manière que le faisceau dévié respectif, pendant que la tête de découpe associée (140a ; 140b) est déplacée le long d'une section de sa courbe de trajectoire (160) et que le substrat est transporté par le dispositif de transport (110) le long du trajet de transport, forme lors de son impact sur la surface du substrat (S) à cet endroit un point d'impact irradié (240 ; 240a) se déplaçant par rapport au substrat (S), qui traverse sur la surface du substrat (S) un trajet de découpe défini (245a ; 245b), afin de découper le substrat (S) le long du trajet de découpe (245a ; 245b),
**caractérisé en ce que**
le dispositif de commande est configuré pour commander le dispositif de déviation et le dispositif de transport (110) de manière coordonnée de telle manière que les trajets de découpe respectifs (245a ; 245b ; 245c) d'au moins deux têtes de découpe (140a ; 140b, 225) du dispositif se touchent ou se chevauchent sur la surface du substrat (S), afin de former un trajet de découpe cohérent combiné (245a ; 245b, 245c).

2. Dispositif (100 ; 200 ; 201 ; 202 ; 300) selon la revendication 1, dans lequel :
le dispositif de déviation est configuré de telle manière que la courbe de trajectoire (160) d'au moins une tête de découpe (140a ; 140b) présente au moins une section dans laquelle elle s'étend de manière oblique par rapport au trajet de transport ; et
le dispositif de commande est configuré pour commander le dispositif de déviation et le dispositif de transport (110) de telle manière qu'il en résulte un trajet de découpe rectiligne au moins par sections (245a ; 245b), pendant que le substrat (S) est transporté au moyen du dispositif de transport (110) le long du trajet de transport et que cette tête de découpe (140a ; 140b) se déplace le long de la section de sa courbe de trajectoire (160) et dévie ainsi le rayonnement incident sur elle sur la surface du substrat (S) ;
dans lequel, en option, le dispositif de commande est configuré pour commander le dispositif de déviation et le dispositif de transport (110) de manière coordonnée de telle manière que le transport du substrat (S) au moyen du dispositif de transport (110) le long du trajet de transport et le déplacement simultané de la tête de découpe (140a ; 140b) le long de la section de sa courbe de trajectoire (160) s'effectuent chacun à une vitesse constante.

3. Dispositif (100 ; 200 ; 201 ; 202 ; 300) selon l'une quelconque des revendications précédentes, dans lequel au moins une tête de découpe (140a ; 140b) pour convertir le rayonnement électromagnétique incident sur elle en un faisceau électromagnétique focalisé dévié (125, 125a) comprend un miroir de déviation ainsi qu'une optique de focalisation (155a ; 155b).

4. Dispositif (100 ; 200 ; 201 ; 202 ; 300) selon l'une quelconque des revendications précédentes, comprenant au moins une source de rayonnement (120) pour générer le rayonnement électromagnétique à dévier au moyen de l'au moins une tête de découpe (140a ; 140b) ;
dans lequel, en option, au moins une source de rayonnement (120) comprend une source de rayonnement laser (120), en option un laser à dioxyde de carbone.

5. Dispositif (100 ; 200 ; 201 ; 202 ; 300) selon l'une quelconque des revendications précédentes, dans lequel la courbe de trajectoire (160) d'au moins une tête de découpe (140a ; 140b) s'étend dans un plan ;
dans lequel, en option, la courbe de trajectoire (160) de l'au moins une tête de découpe (140a ; 140b) présente une forme ovale ou elliptique.

6. Dispositif (100 ; 200 ; 201 ; 202 ; 300) selon la revendication 5, dans lequel le dispositif de transport (110) définit une surface de trajectoire plane sur ou le long de laquelle il peut transporter le substrat (S), et le plan dans lequel s'étend la courbe de trajectoire (160) de l'au moins une tête de découpe (140a ; 140b) s'étend parallèlement à la surface de trajectoire plane.

7. Dispositif (100 ; 200 ; 201 ; 202 ; 300) selon la revendication 5, dans lequel :
le dispositif de transport (110) définit une surface de trajectoire plane sur ou le long de laquelle il peut transporter le substrat (S) ; et
le plan dans lequel s'étend la courbe de trajectoire (160) de l'au moins une tête de découpe (140a ; 140b) et la surface de trajectoire plane ne sont pas parallèles l'un à l'autre.

8. Dispositif (100 ; 200 ; 201 ; 202 ; 300) selon l'une quelconque des revendications précédentes, dans lequel le dispositif de déviation comprend au moins deux têtes de découpe (140a, 140b) dont les courbes de trajectoire (160) coïncident.

9. Dispositif (100 ; 200 ; 201 ; 202 ; 300) selon l'une quelconque des revendications précédentes, dans lequel le dispositif de déviation comprend au moins deux têtes de découpe (140a, 140c) dont les courbes de trajectoire sont différentes.

10. Dispositif (100 ; 200 ; 201 ; 202 ; 300) selon l'une quelconque des revendications précédentes, dans lequel le dispositif de commande est configuré pour commander le dispositif de déviation et le dispositif de transport (110) de manière coordonnée de telle manière qu'il en résulte sur la surface du substrat (S) un trajet de découpe au moins par sections en forme de U (245a ; 245b, 245c) en tant que trajet de découpe (245a ; 245b, 245c) d'une seule tête de découpe (140a ; 140b) ou en tant que trajet de découpe cohérent combiné (245a, 245b, 245c) formé à partir de plusieurs trajets de découpe se touchant ou se chevauchant (245a ; 245b, 245c) d'au moins deux têtes de découpe différentes (140a ; 140b ; 225).

11. Dispositif (201 ; 202) selon l'une quelconque des revendications précédentes, dans lequel le dispositif de déviation comprend deux ou plusieurs têtes de découpe (140a-140f) pouvant être déplacées chacune le long de la courbe de trajectoire fermée (160) de manière à tourner de manière unidirectionnelle, dont au moins l'une est configurée pour tourner sur un premier côté de la courbe de trajectoire fermée (160), tandis qu'au moins une autre des têtes de découpe est configurée pour tourner sur un deuxième côté de la courbe de trajectoire (160) opposé au premier côté ;
dans lequel, en option, les têtes de découpe des deux côtés sont configurées pour tourner de manière décalée dans l'espace l'une par rapport à l'autre et de manière synchrone le long de la courbe de trajectoire (160) de telle manière que, par rotation, au moins une tête de découpe sur le premier côté et une tête de découpe sur le deuxième côté sont irradiées chacune avec le rayonnement électromagnétique pour découper le substrat le long d'un trajet de découpe respectivement associé.

12. Procédé pour découper un substrat (S) au moyen d'un rayonnement électromagnétique focalisé, le procédé comprenant :
le transport du substrat (S) le long d'un trajet de transport au moyen d'un dispositif de transport (110) ;
la déviation d'un rayonnement électromagnétique sur le substrat (S) au moyen d'un dispositif de déviation avec plusieurs têtes de découpe pouvant être déplacées chacune le long d'une courbe de trajectoire fermée (160) de manière à tourner de manière unidirectionnelle, pendant que le substrat (S) est transporté le long du trajet de transport, dans lequel un rayonnement électromagnétique incident sur la tête de découpe respective (140a ; 140b) est dévié au moyen de cette tête de découpe (140a ; 140b) sous forme de faisceau électromagnétique focalisé (125, 125a) sur une surface du substrat (S) et le dispositif de déviation et/ou le dispositif de transport (110) sont commandés de telle manière que le faisceau dévié respectif, pendant que la tête de découpe associée (140a ; 140b) est déplacée le long de sa courbe de trajectoire (160) et que le substrat (S) est transporté par le dispositif de transport (110) le long du trajet de transport, traverse lors de son impact sur la surface du substrat (S) à cet endroit un trajet de découpe défini (245a ; 245b), afin de découper le substrat (S) le long du trajet de découpe (245a ; 245b),
**caractérisé en ce que**
la découpe du substrat (S) est réalisée de telle sorte qu'une ou plusieurs pièces partielles sont ainsi séparées du substrat (S) le long d'une ligne de découpe respective définie par le ou les trajets de découpe, dans lequel :
au moins deux têtes de découpe (140a, 140b, 225) sont utilisées pour séparer au moins une pièce partielle ;
le ou chaque trajet de découpe respectif (245a ; 245b ; 245c) de chacune de ces têtes de découpe (140a, 140b, 225) ne forme qu'une section de la ligne de découpe, sans la traverser déjà complètement ; et
les trajets de découpe (245a ; 245b ; 245c) de ces têtes de découpe (140a, 140b, 225) se complètent dans l'ensemble pour former la ligne de découpe complète.

13. Procédé selon la revendication 12, dans lequel un substrat en forme de bande (S) transporté le long du trajet de transport est utilisé en tant que substrat à découper (S) et la découpe s'effectue de telle manière que la ligne de découpe s'étend pour au moins une pièce partielle du substrat (S) entre deux points d'extrémité de la ligne de découpe qui sont situés à distance l'un de l'autre sur un même bord extérieur du substrat (S).

14. Procédé selon la revendication 12 ou 13, dans lequel :
un substrat qui comprend une couche de matériau appropriée en tant que séparateur (255) pour des éléments galvaniques est utilisé en tant que substrat à découper (S) ; et un ou plusieurs composants pour des éléments galvaniques sont séparés de celui-ci par la découpe du substrat (S) ;
dans lequel, en option, un substrat comprenant plusieurs couches empilées les unes sur les autres, dont l'une est la couche de matériau appropriée en tant que séparateur (255) pour des éléments galvaniques et une autre couche adjacente à celle-ci est un matériau d'électrode pour un élément galvanique, est utilisé en tant que substrat à découper (S).

15. Procédé selon l'une quelconque des revendications 12 à 14, dans lequel un dispositif (100 ; 200 ; 201 ; 202 ; 300) selon l'une quelconque des revendications 1 à 16 est utilisé pour découper le substrat (S).
